# EUROPEAN PATENT APPLICATION

(11) **EP 3 632 551 A1**
(43) Date of publication of application: **08.04.2020**
(21) Application number: 18810659.5
(22) Date of filing: 31.05.2018
(51) Int. Cl.: B01J 29/035, B01J 29/70, C10G 11/18

(54) **STRUCTURE FOR FLUID CATALYTIC CRACKING AND PRODUCTION METHOD THEREFOR, AND DEVICE FOR FLUID CATALYTIC CRACKING PROVIDED WITH THE STRUCTURE**

(30) Priority: 31.05.2017 JP 2017108602
(71) Applicant: Furukawa Electric Co., Ltd., Chiyoda-ku Tokyo 100-8322 (JP)
(72) Inventor: MASUDA, Takao, Hokkaido 0600808 (JP); NAKASAKA, Yuta, Hokkaido 0600808 (JP); YOSHIKAWA, Takuya, Hokkaido 0600808 (JP); KATO, Sadahiro, Tokyo 100-8322 (JP); FUKUSHIMA, Masayuki, Tokyo 100-8322 (JP); TAKAHASHI, Hiroko, Tokyo 100-8322 (JP); BANBA, Yuichiro, Tokyo 100-8322 (JP); SEKINE, Kaori, Tokyo 100-8322 (JP)
(74) Representative: Gunzelmann, Rainer
(86) International application number: PCT/JP2018/021083
(87) International publication number: WO 2018/221695

(57) **Abstract**

There are provided a structured catalyst for fluid catalytic cracking having an excellent catalytic activity, which ensures achieving the satisfactory catalytic activity over a long period of time by suppressing aggregation of catalytic substances, a fluid catalytic cracking device including the same, and a method for producing a structured catalyst for fluid catalytic cracking. The structured catalyst for fluid catalytic cracking includes a support having a porous structure composed of a zeolite-type compound and at least one catalytic substance present inside the support. The support includes channels connecting with one another. The catalytic substance is one of metal nanoparticles and a solid acid. The catalytic substance is present in at least the channel of the support. When the catalytic substance is the metal nanoparticles, the metal nanoparticles are metal nanoparticles of at least one type selected from the group consisting of nickel, cobalt, iron, copper, gold, silver, platinum, palladium, rhodium, iridium, ruthenium, osmium, and molybdenum.

## Description

### Technical Field

The present invention relates to a fluid catalytic cracking structure and a method for producing the same, as well as a fluid catalytic cracking device including the same.

### Background Art

A Fluid Catalytic Cracking (FCC) process has been known as one of main processes for petroleum refining and has been developed as a process that decomposes high-boiling hydrocarbon, such as vacuum gas oil and atmospheric residue, in the presence of a catalyst at 500 to 550°C to produce gasoline with a high octane rating. Solid acid, mainly zeolite, is a mainstream as the catalyst used for the FCC process. Recently, the FCC process occupies an important place as a technology of upgrading heavy oil and has been used to increase production of basic petrochemicals, such as propylene, simultaneously with a production of gasoline. Thus, various catalysts have been developed and studied for such a variety of purposes. Among them, a catalyst is known which includes Ultra Stable Y Type Zeolite (USY) and Rare Earth (RE) metal, namely REUSY, as the main components.

Zeolite catalysts generally have properties, such as high catalytic activity and high stability, based on their microporous structure. However, on the other hand, because of its steric hindrance, there are drawbacks that accessibility to a volume of zeolite micropores is reduced under the catalytic action, and zeolite crystals are not always effectively used.

Many attempts have been made to improve such drawbacks.

For example, Patent Document 1 discloses a catalytic composition for hydrocarbon cracking containing a first zeolite component, such as ITQ-7 zeolite exchanged with a rare earth element, and a second zeolite component, such as faujasite zeolite exchanged with a rare earth element. According to Patent Document 1, it is described that the catalytic composition provides a satisfactory value of a barrel octane rating of gasoline produced and satisfactory yields of C3 olefin and C4 olefin, and also provides a satisfactory yield of the obtained gasoline.

### Citation List

### Patent Literature

Patent Document 1: JP 2003-527957 T

### Summary of Invention

### Technical Problem

However, since catalytic metal is present on or near a surface of the zeolite in the catalyst as described above, the catalytic metal possibly moves by external force or heat, which is likely to result in aggregation (sintering) of catalyst particles. The aggregation of the catalyst particles decreases an effective surface area of the catalyst, thereby reducing the catalytic activity. In addition, even when the zeolite has a structure in which a predetermined interconnected network is formed, there is room for improvements that the zeolite catalyst sufficiently secures accessibility of active sites to reactants or product molecules to maximize effectiveness of the catalyst.

Therefore, an object of the present invention is to provide a structured catalyst for fluid catalytic cracking that provides an excellent catalytic activity and ensures achieving the satisfactory catalytic activity over a long period of time by suppressing aggregation of catalytic substances, a method for producing the same, and a fluid catalytic cracking device including the same.

### Solution to Problem

The present invention is as follows.
[1] A structured catalyst for fluid catalytic cracking including a support having a porous structure composed of a zeolite-type compound, and at least one catalytic substance present inside the support, the support including channels connecting with one another, the catalytic substance being one of metal nanoparticles and a solid acid, the catalytic substance being present in at least the channel of the support, when the catalytic substance is the metal nanoparticles, the catalytic substance being metal nanoparticles of at least one type selected from the group consisting of nickel (Ni), cobalt (Co), iron (Fe), copper (Cu), gold (Au), silver (Ag), platinum (Pt), palladium (Pd), rhodium (Rd), iridium (Ir), ruthenium (Ru), osmium (Os), and molybdenum (Mo).
[2] The structured catalyst for fluid catalytic cracking according to [1], wherein the support is a zeolite Y-type compound.
[3] The structured catalyst for fluid catalytic cracking according to [1] or [2], wherein the channel has any of a one-dimensional pore, a two-dimensional pore, and a three-dimensional pore and an enlarged pore portion, the one-dimensional pore, the two-dimensional pore, and the three-dimensional pore being defined by a framework of the zeolite-type compound, the enlarged pore portion having a different diameter from those of the one-dimensional pore, the two-dimensional pore, and the three-dimensional pore; and the catalytic substance is present in at least the enlarged pore portion of the channel.
[4] The structured catalyst for fluid catalytic cracking according to [3], wherein the enlarged pore portion causes a plurality of pores constituting any of the one-dimensional pore, the two-dimensional pore, and the three-dimensional pore to connect with one another.
[5] The structured catalyst for fluid catalytic cracking according to [3] or [4], wherein, when the catalytic substance is the metal nanoparticles, the metal nanoparticles has a mean particle size larger than a mean inner diameter of the channel and less than or equal to an inner diameter of the enlarged pore portion; or when the catalytic substance is the solid acid, the solid acid is nanoparticles having a mean particle size larger than a mean inner diameter of the channel and less than or equal to an inner diameter of the enlarged pore portion.
[6] The structured catalyst for fluid catalytic cracking according to [5], wherein one of the metal nanoparticles and the solid acid contain(s) a metal element (M) in amount from 0.5 to 2.5 mass% relative to the structured catalyst for fluid catalytic cracking.
[7] The structured catalyst for fluid catalytic cracking according to any one of [3] to [6], wherein the channel has a mean inner diameter from 0.1 nm to 1.5 nm, and the enlarged pore portion has an inner diameter from 0.5 nm to 50 nm.
[8] The structured catalyst for fluid catalytic cracking according to any one of [1] to [7], wherein the catalytic substance is the metal nanoparticles, and the metal nanoparticles have a mean particle size from 0.08 nm to 30 nm.
[9] The structured catalyst for fluid catalytic cracking according to [8], wherein the metal nanoparticles have the mean particle size from 0.4 nm to 11.0 nm.
[10] The structured catalyst for fluid catalytic cracking according to any one of [1] to [9], wherein the catalytic substance is the metal nanoparticles, and a ratio of the mean particle size of the metal nanoparticles to the mean inner diameter of the channel is from 0.05 to 300.
[11] The structured catalyst for fluid catalytic cracking according to any one of [1] to [10], wherein the catalytic substance is the metal nanoparticles, and a ratio of the mean particle size of the metal nanoparticles to the mean inner diameter of the channel is from 0.1 to 30.
[12] The structured catalyst for fluid catalytic cracking according to any one of [1] to [11], wherein the catalytic substance is the metal nanoparticles, and a ratio of the mean particle size of the metal nanoparticles to the mean inner diameter of the channel is from 1.4 to 3.6.
[13] The structured catalyst for fluid catalytic cracking according to any one of [1] to [12], wherein the catalytic substance is further held on an outer surface of the support.
[14] The structured catalyst for fluid catalytic cracking according to [13], wherein a content of the catalytic substance present inside the support is greater than a content of the catalytic substance held on the outer surface of the support.
[15] The structured catalyst for fluid catalytic cracking according to any one of [1] to [14], wherein the zeolite-type compound is a silicate compound.
[16] The structured catalyst for fluid catalytic cracking according to any one of [1] to [15], wherein the structured catalyst for fluid catalytic cracking has one of a cylindrical shape, a leaf-like shape, a dumbbell pillar shape, and a ring-like pellet shape.
[17] A fluid catalytic cracking device includes the structured catalyst for fluid catalytic cracking described in any one of [1] to [16].
[18] A method for producing a structured catalyst for fluid catalytic cracking including: a calcination step of calcinating a precursor material (B), the precursor material (B) being obtained by impregnating a precursor material (A) for obtaining a framework having a porous structure composed of a zeolite-type compound, with a metal containing solution containing one of metal of metal nanoparticles and a metal of solid acid; a hydrothermal treatment step of performing a hydrothermal treatment on a precursor material (C) obtained by calcinating the precursor material (B); and a step of performing a reduction treatment on the hydrothermally treated precursor material (C).
[19] The method for producing a structured catalyst for fluid catalytic cracking according to [18], wherein, prior to the calcination step, from 50 to 500 mass% of a non-ionic surfactant is added to the precursor material (A).
[20] The method for producing a structured catalyst for fluid catalytic cracking according to [18] or [19], wherein, prior to the calcination step, the metal containing solution is dividedly added to the precursor material (A) in multiple times to impregnate the precursor material (A) with the metal containing solution.
[21] The method for producing a structured catalyst for fluid catalytic cracking according to any one of [18] to [20], wherein, when the precursor material (A) is impregnated with the metal containing solution prior to the calcination step, an added amount of the metal containing solution added to the precursor material (A), in terms of a ratio of silicon (Si) constituting the precursor material (A) to a metal element (M) contained in the metal containing solution added to the precursor material (A) (a ratio of number of atoms Si/M), is adjusted to from 10 to 1000.
[22] The method for producing a structured catalyst for fluid catalytic cracking according to [18], wherein, in the hydrothermal treatment step, the precursor material (C) and a structure directing agent are mixed.
[23] The method for producing a structured catalyst for fluid catalytic cracking according to [18], wherein the hydrothermal treatment step is performed under a basic condition.

### Advantageous Effects of Invention

According to the present invention, there can be provided the structured catalyst for fluid catalytic cracking that has an excellent catalytic activity and ensures achieving the satisfactory catalytic activity over a long period of time by suppressing aggregation of the catalytic substances, the method for producing the same, and the fluid catalytic cracking device including the same.

### Brief Description of Drawings

FIG. 1 is a diagram schematically illustrating a structured catalyst for fluid catalytic cracking according to an embodiment of the present invention so that an inner structure can be understood. FIG. 1A is a perspective view (partially shown in cross-section), and FIG. 1B is a partially enlarged cross-sectional view.
FIG. 2 is a partially enlarged cross-sectional view for explaining an example of a function of the structured catalyst for fluid catalytic cracking of FIG. 1. FIG. 2A is a diagram illustrating a sieve function, and FIG. 2B is a diagram explaining catalytic ability.
FIG. 3 is a flowchart depicting an example of a method for producing the structured catalyst for fluid catalytic cracking of FIG. 1.
FIG. 4 is a schematic view illustrating a modified example of the structured catalyst for fluid catalytic cracking of FIG. 1.

### Description of Embodiments

A structured catalyst for fluid catalytic cracking of the present invention includes a support and at least one catalytic substance. The support has a porous structure composed of a zeolite-type compound. The at least one catalytic substance is present inside the support. The support includes channels connecting with one another. The catalytic substance is metal nanoparticles or a solid acid. The catalytic substance is present in at least the channel of the support and preferably held by at least the channel of the support. When the catalytic substance is the metal nanoparticles, the metal nanoparticles are metal nanoparticles of at least one type selected from the group consisting of nickel (Ni), cobalt (Co), iron (Fe), copper (Cu), gold (Au), silver (Ag), platinum (Pt), palladium (Pd), rhodium (Rd), iridium (Ir), ruthenium (Ru), osmium (Os), and molybdenum (Mo).

With the structure above, the catalytic substance, predetermined metal nanoparticles, is present inside at least the channel of the support having the porous structure composed of the zeolite-type compound; therefore, the movement by heat or force from outside the support is suppressed, and furthermore, aggregation of the catalytic substances is suppressed. Consequently, a reduction in catalytic activity caused by a decrease in effective surface area of the catalyst can be avoided, and stability of the catalytic activity of a FCC structure can be improved.

Accordingly, the excellent catalytic activity can be provided, and suppression of the aggregation of the catalytic substances allows achieving satisfactory catalytic activity over a long period of time.

Hereinafter, embodiments of the present invention will be described in detail with reference to drawings.

### Structure of Structured Catalyst

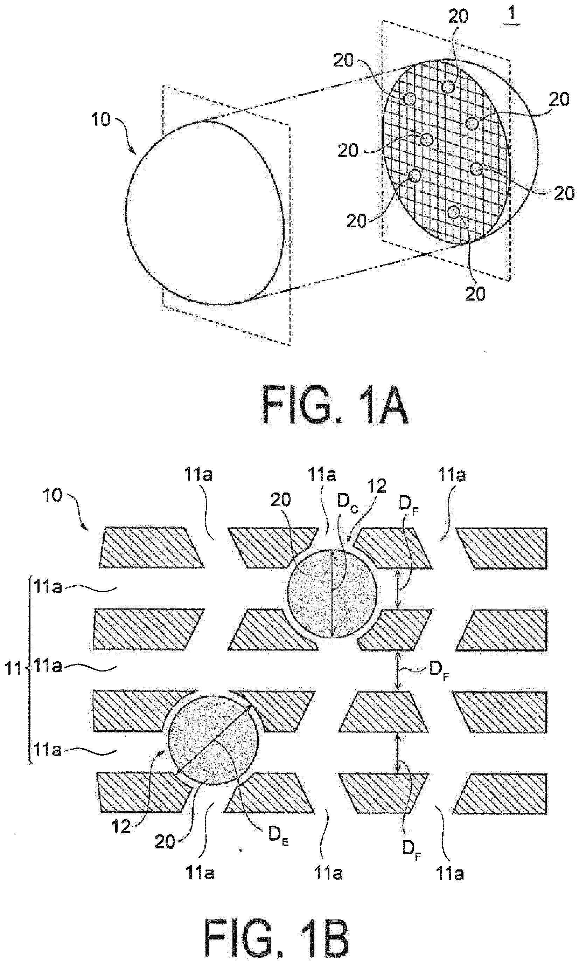

FIG. 1 is a diagram schematically illustrating a fluid catalytic cracking (FCC) structured catalyst (hereinafter simply referred to as "structured catalyst") according to an embodiment of the present invention, FIG. 1A is a perspective view (partially shown in cross-section), and FIG. 1B is a partially enlarged cross-sectional view. Note that the structured catalyst in FIG. 1 illustrates an example, and a shape, dimensions, and the like of each structure according to the present invention are not limited to those illustrated in FIG. 1.

As illustrated in FIG. 1A, a structured catalyst 1 includes a support 10 having a porous structure composed of a zeolite-type compound and at least one catalytic substance 20 present inside the support 10.

In the structured catalyst 1, a plurality of the catalytic substances 20, 20, ... are present in the porous structure of the support 10 or are preferably embedded in the support 10. The catalytic substance 20 is metal nanoparticles or a solid acid having a catalytic ability (catalytic activity). Details of the metal nanoparticles will be described later.

The solid acid is a substance that exhibits one or more functions alone, or by cooperating with the support 10. Specific examples of the functions include a catalytic function, a luminescent (or fluorescent) function, a light absorption function, and an identification function. The solid acid is, for example, a catalytic substance having the catalytic function and is preferably nanoparticles. Note that when the solid acid is the catalytic substance, the support 10 is a support that supports the catalytic substance.

The support 10 has the porous structure, and as illustrated in FIG. 1B, a plurality of pores 11a, 11a, ... are suitably formed so as to provide channels 11 connecting with one another. Here, the catalytic substance 20 is present in at least the channel 11 in the support 10 and preferably held by at least the channel 11 of the support 10.

With such a structure, movement of the catalytic substances 20 within the support 10 is restricted, and aggregation of the catalytic substances 20, 20 is effectively prevented. As a result, a decrease in effective surface area of the catalytic substance 20 can be effectively suppressed, and the catalytic activity of the catalytic substance 20 lasts over a long period of time. In other words, the structured catalyst 1 can suppress the decrease in catalytic activity due to the aggregation of the catalytic substances 20, thereby ensuring extended life time of the structured catalyst 1. In addition, the extended life time of the structured catalyst 1 allows reducing a replacement frequency of the structured catalyst 1, allows significantly reducing an amount of waste of the used structured catalyst 1, and allows achieving resource saving.

Typically, when the structured catalyst is used in a fluid (for example, heavy oil), the structured catalyst is possibly subjected to an external force from the fluid. In this case, in a case where the catalytic substance is held only in an attached state to an outer surface of the support 10, there is a problem that the catalytic substance is likely to separate from the outer surface of the support 10 due to an influence of the external force from the fluid. In contrast, in the structured catalyst 1, the catalytic substance 20 is held by at least the channel 11 of the support 10, and therefore, even when subjected to an influence of an external force caused by a fluid, the catalytic substance 20 is less likely to separate from the support 10. That is, when the structured catalyst 1 is in a fluid, the fluid flows into the channel 11 through the pore 11a of the support 10. Accordingly, it is considered that a speed of the fluid flowing into the channel 11 is slower than a speed of the fluid flowing on the outer surface of the support 10 due to a flow path resistance (frictional force). Due to the influence of such a flow path resistance, a pressure received by the catalytic substance 20 held in the channel 11 from the fluid is lower than a pressure received by the catalytic substance from the fluid outside of the support 10. Accordingly, the separation of the catalytic substances 20 present inside the support 11 can be effectively suppressed, and the catalytic activity of the catalytic substance 20 can be stably maintained over a long period of time. Note that the flow path resistance as described above is considered to be larger as the channel 11 of the support 10 has a plurality of bends and branches, and the interior of the support 10 becomes more complicated, three-dimensional structure.

Preferably, the channel 11 has any of a one-dimensional pore, a two-dimensional pore, and a three-dimensional pore defined by a framework of the zeolite-type compound, and an enlarged pore portion 12 having a different diameter from those of the one-dimensional pore, the two-dimensional pore, and the three-dimensional pore. In this case, the catalytic substance 20 is preferably present in at least the enlarged pore portion 12. More preferably, the catalytic substance 20 is embedded at least in the enlarged pore portion 12. Here, the "one-dimensional pore" refers to a tunnel-type or cage-type pore forming a one-dimensional channel, or a plurality of tunnel-type or cage-type pores (a plurality of one-dimensional channels) forming a plurality of one-dimensional channels. Also, the "two-dimensional pore" refers to a two-dimensional channel in which a plurality of one-dimensional channels are connected two-dimensionally. The "three-dimensional pore" refers to a three-dimensional channel in which a plurality of one-dimensional channels are connected three-dimensionally.

As a result, the movement of the catalytic substance 20 in the support 10 is further restricted, and the separation of the catalytic substance 20 and the aggregation of the catalytic substances 20, 20 can be further effectively prevented. Embedding refers to a state in which the catalytic substances 20 are encapsulated in the support 10. At this time, the catalytic substances 20 and the support 10 need not necessarily be in direct contact with one another, and the catalytic substances 20 may be indirectly held by the support 10 with other substances (for example, a surfactant and the like) interposed between the catalytic substances 20 and the support 10.

Although FIG. 1B illustrates the case in which the catalytic substance 20 is embedded in the enlarged pore portion 12, the structure is not only limited to this. The catalytic substance 20 may be held by the channel 11 with a part thereof protruding outside the enlarged pore portion 12. Furthermore, the catalytic substance 20 may be partially buried in a part of the channel 11 other than the enlarged pore portion 12 (for example, an inner wall part of the channel 11), or may be held by fixing, for example.

Additionally, the enlarged pore portion 12 preferably connects with the plurality of pores 11a, 11a constituting any one of the one-dimensional pore, the two-dimensional pore, and the three-dimensional pore. As a result, separate channels different from the one-dimensional pore, the two-dimensional pore, or the three-dimensional pore are provided inside the skeletal body 10, so that a function of metal oxide nanoparticles 20 can be further exhibited.

Additionally, the channel 11 is preferably formed three-dimensionally by including a branch portion or a merging portion in the support 10, and the enlarged pore portion 12 is preferably provided in the branch portion or the merging portion of the channel 11.

A mean inner diameter D_{F} of the channel 11 formed in the support 10 is calculated from a mean value of a short diameter and a long diameter of the pore 11a constituting any of the one-dimensional pore, the two-dimensional pore, and the three-dimensional pore. The mean inner diameter D_{F} is, for example, from 0.1 nm to 1.5 nm, and preferably from 0.5 nm to 0.8 nm. An inner diameter D_{E} of the enlarged pore portion 12 is from 0.5 nm to 50 nm, for example. The inner diameter D_{E} is preferably from 1.1 nm to 40 nm, and more preferably from 1.1 nm to 3.3 nm. For example, the inner diameter D_{E} of the enlarged pore portion 12 depends on a fine pore diameter of a precursor material (A) and a mean particle size D_{C} of the catalytic substance 20 to be embedded described later. The inner diameter D_{E} of the enlarged pore portion 12 has a size such that the enlarged pore portion 12 can embed the catalytic substance 20.

The support 10 is composed of the zeolite-type compound. Examples of the zeolite-type compounds include a silicate compound, such as zeolite (aluminosilicate), cation-exchanged zeolite, and silicalite, a zeolite analog compound, such as aluminoborate, aluminoarsenate, and germanate, and a phosphate-based zeolite analog substance, such as molybdenum phosphate. Among these, the zeolite-type compound is preferably a silicate compound.

The zeolite-type compound has a framework selected from FAU type (Y type or X type), MTW type, MFI type (ZSM-5), FER type (ferrierite), LTA type (A type), MWW type (MCM-22), MOR type (mordenite), LTL type (L type), and BEA type (beta type). When the catalytic substance 20 is metal nanoparticles, the framework is preferably the FAU type and more preferably the Y type in terms of the catalytic activity of the catalyst for FCC. In addition, when the catalytic substance 20 is a solid acid, the framework is preferably the MFI type, and more preferably ZSM-5.

A plurality of pores having pore diameters corresponding to each of the frameworks are formed in the zeolite-type compound. For example, the maximum pore diameter of the FAU type zeolite is 0.80 nm (8.0 Å) and the mean pore diameter is 0.74 nm (7.4 Å).

The catalytic substance 20 is described in detail below.

The catalytic substance 20 is metal nanoparticles or a solid acid. When the catalytic substance 20 is the solid acid, the catalytic substance 20 is preferably nanoparticles. There are cases that the metal nanoparticles or the nanoparticles of the solid acid (hereinafter referred to as "solid acid nanoparticles") are primary particles or secondary particles formed through aggregation of the primary particles. The metal nanoparticles or the solid acid nanoparticles preferably have the mean particle size D_{C} larger than the mean inner diameter D_{F} of the channel 11 and less than or equal to the inner diameter D_{E} of the enlarged pore portion 12 (D_{F} < D_{C} ≤ D_{E}). The catalytic substance 20 is suitably embedded in the enlarged pore portion 12 in the channel 11, and the movement of the catalytic substance 20 in the support 10 is restricted. Thus, even when the catalytic substance 20 is subjected to external force from the fluid, the movement of the catalytic substance 20 in the support 10 is suppressed, and it is possible to effectively prevent mutual contact of the catalytic substances 20, 20, ... embedded in the respective enlarged pore portions 12, 12, ... dispersedly disposed in the channels 11 of the support 10.

In both cases of the primary particles and the secondary particles, the metal nanoparticles have the mean particle size D_{C} of preferably from 0.08 nm to 30 nm, more preferably from 0.08 nm or more and less than 25 nm, further preferably from 0.4 nm to 11.0 nm, and particularly preferably from 0.8 nm to 2.7 nm. Furthermore, a ratio of the mean particle size D_{C} of the metal nanoparticles to the mean inner diameter D_{F} of the channel 11 (D_{C}/D_{F}) is preferably from 0.05 to 300, more preferably from 0.1 to 30, further preferably from 1.1 to 30, and particularly preferably from 1.4 to 3.6.

In both cases of the primary particles and the second particles, the mean particle size D_{C} of the solid acid nanoparticles is preferably from 0.1 nm to 50 nm, more preferably 0.1 nm or more and less than 30 nm, further preferably from 0.45 nm to 14.0 nm, and particularly preferably from 1.0 nm to 3.3 nm. Furthermore, the ratio of the mean particle size D_{C} of the solid acid 20 to the mean inner diameter D_{F} of the channel 11 is preferably from 0.06 to 500, more preferably from 0.1 to 36, further preferably from 1.1 to 36, and particularly preferably from 1.7 to 4.5.

A metal element (M) of the metal nanoparticles or the solid acid is preferably contained in an amount of from 0.5 to 2.5 mass% relative to the structured catalyst 1, and more preferably from 0.5 to 1.5 mass% relative to the structured catalyst 1. For example, when the metal element (M) is Co, a content (mass%) of the Co element is expressed as (mass of Co element)/(mass of all elements of structured catalyst 1) × 100.

The metal nanoparticles only need to be constituted by an unoxidized metal, and may be constituted by a single metal or a mixture of two or more types of metals, for example. Note that in the present specification, the "metal" constituting the metal nanoparticles (as the raw material) means to include a single metal containing one type of metal element (M) and a metal alloy containing two or more types of metal elements (M), and is a generic term for a metal containing one or more types of metal elements.

Furthermore, the metal nanoparticles as the catalytic substance 20 are at least one type of metal nanoparticles selected from the group consisting of nickel (Ni), cobalt (Co), iron (Fe), copper (Cu), gold (Au), silver (Ag), platinum (Pt), palladium (Pd), rhodium (Rd), iridium (Ir), ruthenium (Ru), osmium (Os), and molybdenum (Mo). The metal nanoparticles as the catalytic substance 20 are metal nanoparticles containing one or more types of these metals as a main component.

Among these metals, at least one type selected from the group consisting of nickel (Ni), cobalt (Co), iron (Fe), copper (Cu), platinum (Pt), and molybdenum (Mo) is preferred in terms of the catalytic activity of the catalyst for FCC, and at least one type selected from the group consisting of nickel (Ni), cobalt (Co), iron (Fe), and platinum (Pt) is more preferred. Combined use of each of these preferred metal nanoparticles or further preferred metal nanoparticles with the Y type zeolite is further preferred.

Meanwhile, the solid acid as catalytic substances 20 specifically includes metal oxides and their hydrates, sulfides, metal salts, complex oxides, and heteropoly acids. The metal oxides include iron oxide (FeOx), zinc oxide (ZnO), aluminum oxide (Al₂O₃), zirconium oxide (ZrO₂), titanium oxide (TiO₂), selenium trioxide (SeO₃), selenium dioxide (SeO₂), tellurium trioxide (TeO₃), tellurium dioxide (TeO₂), tin dioxide (SnO₂), manganese oxide (Mn₂O₇), technetium oxide (Tc₂O₇), and rhenium oxide (Re₂O₇). Sulfides include cadmium sulfide (CdS) and zinc sulfide (ZnS). Metal salts include magnesium sulfate (MgSO₄), iron sulfate (FeSO₄), and aluminum chloride (AlCl₃). Complex oxides include SiO₂-TiO₂, SiO₂-MgO, and TiO₂-ZrO₂. Furthermore, heteropoly acids include phosphotungstic acid, silicotungstic acid, phosphomolybdic acid, and silicomolybdic acid. One type of these solid acids may be used alone, or a plurality of types of them may be used in combination. Among these metal oxides, the solid acid is preferably at least one type selected from the group consisting of aluminum oxide (Al₂O₃), zirconium oxide (ZrO₂), and zinc oxide (ZnO). Note that the solid acid is distinguished from the zeolite-type compound constituting the support 10. The solid acid does not include, for example, zeolite.

The ratio of silicon (Si) constituting the support 10 to the metal element (M) constituting the metal nanoparticles or the solid acid (the ratio of number of atoms Si/M) is preferably from 10 to 1000. With the ratio of 1000 or less, the activity is high, and the action of the catalytic substance can be sufficiently obtained. On the other hand, with the ratio of 10 or greater, the ratio of the metal nanoparticles does not become too large, and a decrease in strength of the support 10 can be suppressed. Note that the metal nanoparticles here means nanoparticles held or supported inside the support 10, not including metal nanoparticles adhered to the outer surface of the support 10.

### Function of Structured Catalyst

The structured catalyst 1 includes the support 10 having the porous structure and the at least one catalytic substance 20 present inside the support as described above. The structured catalyst 1 exhibits the catalytic ability according to the function of the catalytic substance 20 by bringing the catalytic substance 20 present inside the support into contact with a fluid. Specifically, the fluid in contact with the outer surface 10a of the structured catalyst 1 flows into the support 10 through the pore 11a formed in the outer surface 10a, is guided into the channel 11, moves through the inside of the channel 11, and exits to the outside of the structured catalyst 1 through the other pore 11a. In the pathway through which the fluid moves through the inside of the channel 11, the contact with the catalytic substance 20 held by the channel 11 generates a catalytic reaction according to the catalytic substance 20. In addition, the structured catalyst 1 has molecular sieving capability due to the support having the porous structure.

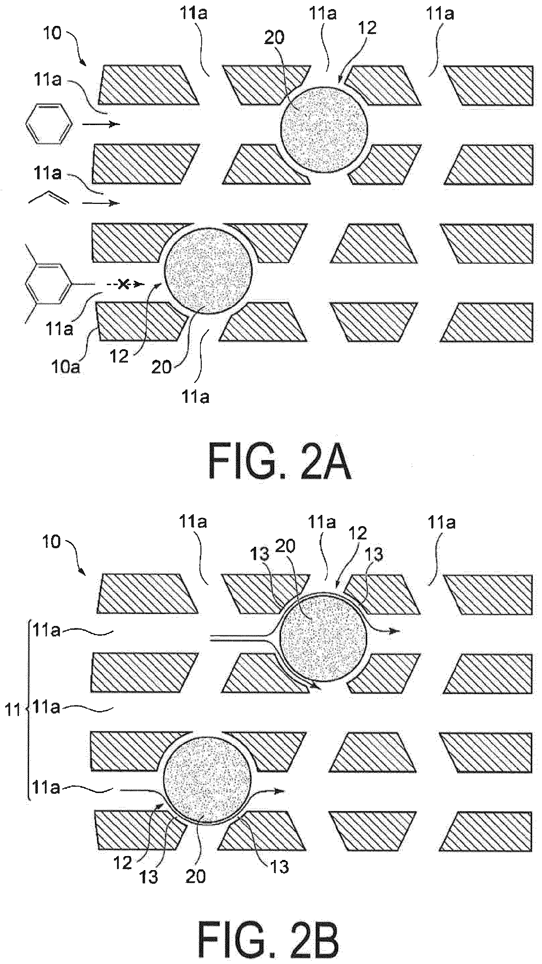

First, the case in which the fluid is a liquid containing benzene, propylene, and mesitylene is described as an example with reference to FIG. 2A for the molecular sieving capability of the structured catalyst 1. As illustrated in FIG. 2A, a compound (e.g., benzene, propylene) composed of molecules having a size less than or equal to the pore diameter of the pore 11a, in other words, less than or equal to the inner diameter of the channel 11, can enter the inside of the support 10. On the other hand, a compound composed of molecules having a size exceeding the pore diameter of the pore 11a (for example, mesitylene) cannot enter the inside of the support 10. In this way, when the fluid contains a plurality of types of compounds, the reaction of compounds that cannot enter into the support 10 can be restricted and a compound capable of entering into the support 10 can undergo reaction

Among the compounds produced by the reaction in the support 10, only compounds composed of molecules having a size less than or equal to the pore diameter of the pore 11a can exit through the pore 11a to the exterior of the support 10, and are obtained as reaction products. On the other hand, a compound that cannot exit through the pore 11a to the exterior of the support 10 can be released to the exterior of the support 10 when converted into a compound composed of molecules having a size to be able to exit to the exterior of the support 10. In this way, a specified reaction product can be selectively obtained by using the structured catalyst 1.

As illustrated in FIG. 2B, in the structured catalyst 1, the catalytic substance 20 is embedded in the enlarged pore portion 12 of the channel 11. In a case where the mean particle size D_{C} of the metal nanoparticles as the catalytic substance 20 is larger than the mean inner diameter D_{F} of the channel 11 and smaller than the inner diameter D_{E} of the enlarged pore portion 12 (D_{F} < D_{C} < D_{E}), a small channel 13 is formed between the metal nanoparticles and the enlarged pore portion 12. As indicated by the arrows in FIG. 2B, the fluid entering the small channel 13 comes into contact with the metal nanoparticles. Since each of metal nanoparticles is embedded in the enlarged pore portion 12, the movement of the metal nanoparticles in the support 10 is restricted. Thus, the aggregation of the metal nanoparticles in the support 10 is prevented. As a result, a large contact area between the metal nanoparticles and the fluid can be stably maintained.

In the present embodiment, due to the use of the structured catalyst 1 for FCC treatment, gasoline having a high octane rating can be produced together with propylene or the like using high-boiling hydrocarbon, such as alkylbenzene, as a raw material. As described above, in the structured catalyst 1, the aggregation of the catalytic substances 20 is suppressed, so the catalytic activity can be maintained over a longer period of time than those of the known catalysts, and the life time of the structured catalyst 1 can extended.

### Method for Producing Structured Catalyst

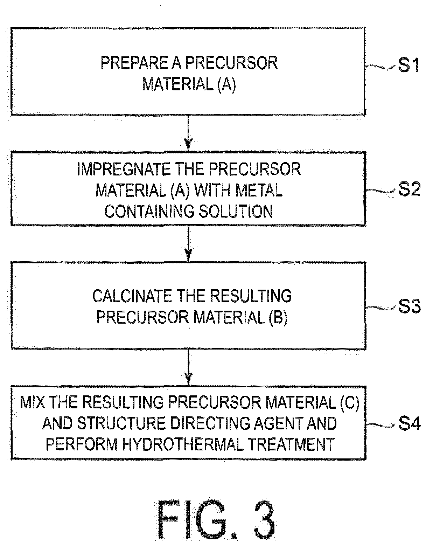

FIG. 3 is a flowchart depicting a method for producing the structured catalyst 1 of FIG. 1. The following describes an example of the method for producing the structured catalyst in which the catalytic substance present inside the support is the metal nanoparticles.

### Step S1: Preparation Step

As illustrated in FIG. 3, first, the precursor material (A) for obtaining the support having the porous structure composed of the zeolite-type compound is prepared. The precursor material (A) is preferably a regular mesopore material, and can be appropriately selected according to the type (composition) of the zeolite-type compound constituting the support of the structured catalyst.

Here, when the zeolite-type compound constituting the support of the structured catalyst is a silicate compound, the regular mesopore material is preferably a compound including a Si-O skeleton in which fine pores having a pore diameter from 1 to 50 nm are uniformly sized and regularly developed one-dimensionally, two-dimension-ally, or three-dimensionally. While such a regular mesopore material is obtained as a variety of synthetic materials depending on the synthetic conditions. Specific examples of the synthetic material include SBA-1, SBA-15, SBA-16, KIT-6, FSM-16, and MCM-41. Among them, MCM-41 is preferred. Note that the pore diameter of SBA-1 is from 10 to 30 nm, the pore diameter of SBA-15 is from 6 to 10 nm, the pore diameter of SBA-16 is 6 nm, the pore diameter of KIT-6 is 9 nm, the pore diameter of FSM-16 is from 3 to 5 nm, and the pore diameter of MCM-41 is from 1 to 10 nm. Examples of such a regular mesopore material include mesoporous silica, mesoporous aluminosilicate, and mesoporous metallosilicate.

The precursor material (A) may be any of a commercially available product or a synthetic product. When the precursor material (A) is synthesized, it can be synthesized by a known method for synthesis of a regular mesopore material. For example, a mixed solution containing a raw material containing the constituent elements of the precursor material (A) and a molding agent for directing the structure of the precursor material (A) is prepared, and the pH is adjusted as necessary to perform hydrothermal treatment (hydrothermal synthesis). Thereafter, the precipitate (product) obtained by hydrothermal treatment is collected (e.g., filtered), washed and dried as necessary, and then calcinated to obtain the precursor material (A), which is a powdery regular mesopore material. Here, examples of the solvent for the mixed solution that can be used include water, an organic solvent such as alcohol, or a mixed solvent thereof. In addition, the raw material is selected according to the type of the support, and examples thereof include silica agents such as tetraethoxysilane (TEOS), fumed silica, and quartz sand. In addition, various types of surfactants, block copolymers, and the like can be used as the molding agent, and it is preferably selected depending on the type of the synthetic materials of the regular mesopore material. For example, a surfactant such as hexadecyltrimethylammonium bromide is preferable for producing MCM-41. For example, the hydrothermal treatment can be performed under a treatment condition at 0 to 2000 kPa and 80 to 800°C for 5 hours to 240 hours in a sealed container. For example, the calcination treatment can be performed in air under a treatment condition at 350 to 850°C for 2 to 30 hours.

### Step S2: Impregnating Step

The prepared precursor material (A) is then impregnated with a metal containing solution to obtain a precursor material (B).

The metal containing solution only needs to be a solution containing a metal component (for example, a metal ion) corresponding to the metal element (M) constituting the metal nanoparticles or the solid acid of the structured catalyst, and can be prepared, for example, by dissolving a metal salt containing the metal element (M) in a solvent. Examples of such metal salts include chlorides, hydroxides, oxides, sulfates, and nitrates. Of these, nitrates are preferable. Examples of the solvent that can be used include water, an organic solvent such as alcohol, or a mixed solvent thereof.

The method for impregnating the precursor material (A) with the metal containing solution is not particularly limited; however, for example, the metal containing solution is preferably added by small amount several times while mixing the powdery precursor material (A) before a calcination step described below. In addition, the surfactant is preferably added to the precursor material (A) as the additive before adding the metal containing solution to the precursor material (A) from the perspective of allowing the metal containing solution to enter the fine pores of the precursor material (A) more easily. It is believed that such additives serve to cover the outer surface of the precursor material (A) and inhibit the subsequently added metal containing solution from adhering to the outer surface of the precursor material (A), making it easier for the metal containing solution to enter the fine pores of the precursor material (A).

Examples of such additives include non-ionic surfactants, such as polyoxyethylene alkyl ether such as polyoxyethylene oleyl ether, and polyoxyethylene alkylphenyl ether. It is believed that these surfactants do not adhere to the inside of the fine pores because their molecular sizes are large and cannot enter the fine pores of the precursor material (A), and will not interfere with the penetration of the metal containing solution into the fine pores. As the method for adding the non-ionic surfactant, for example, it is preferable to add 50 to 500 mass% of the non-ionic surfactant to the precursor material (A) prior to the calcination step described below. When the added amount of the non-ionic surfactant to the precursor material (A) is less than 50 mass%, the aforementioned suppressing action will not easily occur, and when more than 500 mass% of the non-ionic surfactant is added to the precursor material (A), the viscosity becomes too high, which is not preferable. Thus, the added amount of the non-ionic surfactant to the precursor material (A) is a value within the range described above.

Furthermore, the added amount of the metal containing solution to the precursor material (A) is preferably adjusted as appropriate in consideration of the amount of the metal element (M) contained in the metal containing solution with which the precursor material (A) is impregnated (that is, the amount of the metal element (M) present in the precursor material (B)). For example, prior to the calcination step described below, the added amount of the metal containing solution added to the precursor material (A), in terms of the ratio of silicon (Si) constituting the precursor material (A) to the metal element (M) contained in the metal containing solution added to the precursor material (A) (the ratio of number of atoms Si/M) is preferably adjusted to 10 to 1000, and more preferably 50 to 200. For example, in a case where the surfactant is added to the precursor material (A) as the additive prior to adding the metal containing solution to the precursor material (A), when the added amount of the metal containing solution added to the precursor material (A), in terms of the ratio of number of atoms Si/M, is from 50 to 200, 0.5 to 2.5 mass% of the metal element (M) of the metal oxide nanoparticles can be contained in the structured catalyst 1.

In the state of the precursor material (B), the amount of the metal element (M) present in the fine pores is generally proportional to the added amount of the metal containing solution added to the precursor material (A) when the metal concentration of the metal containing solution, the presence or absence of additives, and other various conditions, such as temperature and pressure, are the same. The amount of metal element (M) present in the precursor material (B) is also in a proportional relationship to the amount of metal element constituting the metal nanoparticles present inside the support of the structured catalyst. Thus, by regulating the added amount of the metal containing solution added to the precursor material (A) to the range described above, the inside of the fine pores of the precursor material (A) can be sufficiently impregnated with the metal containing solution, and thus the amount of metal nanoparticles present inside the support of the structured catalyst can be adjusted.

After impregnating the precursor material (A) with the metal containing solution, a washing treatment may be performed as necessary. The wash solution that can be used include water, an organic solvent such as alcohol, or a mixed solution thereof. Furthermore, after the precursor material (A) is impregnated with the metal-containing solution, and subjected to the washing treatment as necessary, preferably, the precursor material (A) is further subjected to drying treatment. Drying treatments include overnight natural drying and high temperature drying at 150°C or lower. Note that when the calcination treatment described below is performed in the state in which there is a large amount of moisture contained in the metal containing solution and moisture of the wash solution remaining in the precursor material (A), the skeletal structure of the regular mesopore material of the precursor material (A) may be broken, and thus it is preferable to dry it sufficiently.

### Step S3: Calcination Step

Next, a precursor material (C) is obtained by calcinating the precursor material (B) obtained by impregnating the precursor material (A) for obtaining the support having the porous structure composed of the zeolite-type compound with the metal containing solution.

For example, the calcination treatment is preferably performed in air under a treatment condition at 350 to 850°C for 2 to 30 hours. The metal component that has impregnated the pores of the regular mesopore material undergoes crystal growth by such a calcination treatment, and metal nanoparticles are formed in the pores.

### Step S4: Hydrothermal Treatment Step

A mixed solution of the precursor material (C) and the structure directing agent is then prepared, and the precursor material (C) obtained by calcinating the precursor material (B) is hydrothermally treated to obtain a structured catalyst.

The structure directing agent is a molding agent for directing the skeletal structure of the support of the structured catalyst, and, for example, a surfactant can be used. The structure directing agent is preferably selected according to the skeletal structure of the support of the structured catalyst, and, for example, a surfactant, such as tetramethylammonium bromide (TMABr), tetraethylammonium bromide (TEABr), and tetrapropylammonium bromide (TPABr) are suitable.

The mixing of the precursor material (C) and the structure directing agent may be performed during the hydrothermal treatment step or may be performed before the hydrothermal treatment step. Furthermore, the method for preparing the mixed solution is not particularly limited, and the precursor material (C), the structure directing agent, and the solvent may be mixed simultaneously, or the precursor material (C) and the structure directing agent may each be dispersed in the solvents and then these dispersions may be mixed. Examples of the solvent that can be used include water, an organic solvent such as alcohol, or a mixed solvent thereof. In addition, it is preferable that the pH of the mixed solution is adjusted using an acid or a base prior to the hydrothermal treatment.

The hydrothermal treatment can be performed by a known method. For example, the hydrothermal treatment is preferably performed under a treatment condition at 0 to 2000 kPa at 80 to 800°C for 5 hours to 240 hours in a sealed container. Furthermore, the hydrothermal treatment is preferably performed under a basic condition.

Although the reaction mechanism here is not necessarily clear, by performing the hydrothermal treatment using the precursor material (C) as a raw material, the skeletal structure of the regular mesopore material of the precursor material (C) gradually collapses. However, under the action of the structure directing agent, a new skeletal structure (porous structure) as the support of the structured catalyst is formed while substantially maintaining the position of the metal nanoparticles in the fine pores of the precursor material (C). The structured catalyst obtained in this manner includes the support having the porous structure and the metal nanoparticles present inside the support, and further the support includes the channels in which a plurality of pores connect with one another by the porous structure, and at least a part of the metal nanoparticles are held by the channels in the support.

Furthermore, in the present embodiment, in the hydrothermal treatment step, a mixed solution of the precursor material (C) and the structure directing agent is prepared, and the precursor material (C) is subjected to hydrothermal treatment, which is not a limitation. The precursor material (C) may be subjected to hydrothermal treatment without mixing the precursor material (C) and the structure directing agent.

The precipitate obtained after the hydrothermal treatment (structured catalyst) is preferably washed, dried, and calcinated as necessary after collected (e.g., filtered). The wash solution that can be used include water, an organic solvent such as alcohol, or a mixed solution thereof. Drying treatments include overnight natural drying and high temperature drying at 150°C or lower. Note that when calcination treatment is performed in the state in which there is a large amount of moisture remaining in the precipitate, the skeletal structure as the support of the structured catalyst may be broken, and thus it is preferable to dry the precipitate sufficiently. Additionally, for example, the calcination treatment can be performed in air under a treatment condition at 350 to 850°C for 2 to 30 hours. With such calcination treatment, the structure directing agent that has been attached to the structured catalyst is burned and removed. Furthermore, the structured catalyst can be used as is without subjecting the collected precipitate to calcination treatment, depending on the intended use. For example, when the environment in which the structured catalyst is used is a high temperature environment of an oxidizing atmosphere, exposure of the structured catalyst to a usage environment for a period of time allows the structure directing agent to be burned and removed and to obtain a structured catalyst similar to that when subjected to calcination treatment. Thus, the obtained structured catalyst can be used as is.

The production method described above is an example in which the metal element (M) contained in the metal containing solution with which the precursor material (A) is impregnated is a hardly oxidized metal species (for example, noble metal).

When the metal element (M) contained in the metal containing solution with which the precursor material (A) is impregnated is an easily oxidized metal species (for example, Fe, Co, and Cu), a reduction treatment of the hydrothermally treated precursor material (C) is preferably performed after the hydrothermal treatment step. When the metal element (M) contained in the metal containing solution is an easily oxidized metal species, the metal component is oxidized due to heat treatment in steps (Steps S3 and 4) after the impregnating process (Step S2). Therefore, metal oxide nanoparticles are present inside the support formed in the hydrothermal treatment step (Step S4). Therefore, to obtain the structured catalyst in which the metal nanoparticles are present inside the support, it is desirable to perform the calcination treatment on the collected precipitate after the hydrothermal treatment, and further to perform the reduction treatment under a reducing gas atmosphere such as hydrogen gas. By performing the reduction treatment, the metal oxide nanoparticles present inside the support are reduced, and the metal nanoparticles corresponding to the metal element (M) constituting the metal oxide nanoparticles are formed. As a result, the structured catalyst in which the metal nanoparticles are present inside the support is obtained. Note that such a reduction treatment only needs to be performed as necessary. For example, when the environment in which the structured catalyst is used is a reducing atmosphere, the metal oxide nanoparticles are reduced by exposing the metal oxide nanoparticles to the usage environment for a period of time. Accordingly, a structured catalyst similar to that when subjected to the reduction treatment can be obtained, thereby ensuring the use of the structured catalyst in which oxide nanoparticles are present inside the support as it is.

### Modified Example of Structured Catalyst 1

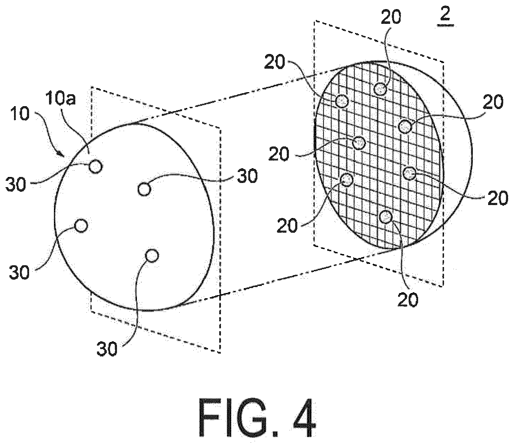

FIG. 4 is a schematic view illustrating the modified example of the structured catalyst 1 of FIG. 1.

Although FIG. 1 illustrates the structured catalyst 1 including the support 10 and the catalytic substance 20 present inside the support 10, the structured catalyst 1 is not limited to this composition. For example, as illustrated in FIG. 4, a structured catalyst 2 may further include another catalytic substance 30 held on the outer surface 10a of the support 10.

This catalytic substance 30 is a substance that exhibits one or more catalytic abilities. The catalytic abilities that the other catalytic substance 30 has may be the same as or different from the catalytic abilities that the catalytic substance 20 has. Also, in a case where both of the catalytic substances 20, 30 are substances having the same catalytic abilities, the material of the other catalytic substance 30 may be the same as or different from the material of the catalytic substance 20. With this composition, a content of the catalytic substances held in the structured catalyst 2 can be increased, and the catalytic activity of the catalytic substance can be further promoted.

In this case, the content of the catalytic substance 20 present inside the support 10 is preferably greater than the content of the other catalytic substance 30 held on the outer surface 10a of the support 10. Thus, the catalytic ability of the catalytic substance 20 held inside the support 10 becomes dominant, and the catalytic ability of the catalytic substance is stably exhibited.

While the structured catalyst according to the embodiments of the present invention has been described, the present invention is not limited to the embodiments, and various modifications and changes are possible on the basis of the technical concept of the present invention.

For example, in the embodiments, while an appearance of the structured catalyst is powder, the appearance is not limited to this, and may be a cylindrical shape, a leaf-like shape, a dumbbell pillar shape, or a ring-like pellet shape. While the method for molding the structured catalyst to obtain the shape is not particularly limited, a general method, such as extrusion molding, tableting molding, or oil granulation can be used. Furthermore, for example, a method may be used in which catalyst powder is molded by a uniaxial pressurizer to produce a structured catalyst, and then the catalyst molded body is passed through a sieve while crushing the catalyst molded body to obtain the structured catalyst composed of at least one secondary particles having a targeted secondary particle diameter. One produced by granulating the structured catalyst in the method described above can be referred to as a structured catalyst or a catalyst molded body. To granulate the structured catalyst, for example, the structured catalyst having a mean particle size (or a mean equivalent circle diameter), for example, from 0.01 µm to 15 µm can be molded. To increase a size of the structured catalyst to be greater than several centimeters, a binder, such as alumina, may be mixed and molded. Due to the structured catalyst or the catalyst molded body having the shape and dimensions, impurities, fractions, and the like can be prevented from remaining in a catalyst layer when, for example, high-boiling hydrocarbon, such as vacuum gas oil and atmospheric residue, is cracked and gasoline with a high octane rating is produced.

Note that the structured catalyst of the present invention may be powder or a molded body, and the form thereof is not particularly limited. For example, when organometal compound components, such as vanadium and nickel, contained in the FCC raw material oil have a high content, these metal components may be deposited on the catalyst and the reaction possibly stops due to pressure loss; therefore, the molded body is preferred from this point.

Further, for example, a fluid catalytic cracking device including the structured catalyst may be provided. Examples of such a device include an FCC device, a propylene rectification device provided with the FCC device, a desulfurization device for cracked gasoline, or the like. The use of the structured catalyst of an embodiment of the present invention in the catalytic reaction using such a device allows providing the effects similar to the above-described effects.

### Examples

### Examples 1 to 415

### Synthesis of Precursor Material (A)

A mixed aqueous solution was prepared by mixing a silica agent (tetraethoxysilane (TEOS), available from Wako Pure Chemical Industries, Ltd.) and a surfactant as a molding agent. The pH was adjusted as appropriate, and hydrothermal treatment was performed at 80 to 350°C for 100 hours in a sealed container. Thereafter, the produced precipitate was filtered out, washed with water and ethanol, and then further calcinated in air at 600°C for 24 hours to obtain the precursor materials (A) of the types and having the pore diameters shown in Tables 1 to 8. Note that the following surfactants were used depending on the type of the precursor material (A) ("the type of the precursor material (A): surfactant").
- MCM-41: Hexadecyltrimethylammonium bromide (CTAB) (available from Wako Pure Chemical Industries, Ltd.)
- SBA-1: Pluronic P123 (available from BASF)

### Production of Precursor Materials (B) and (C)

Next, a metal containing aqueous solution was prepared by dissolving a metal salt containing the metal element (M) in water according to the metal element (M) constituting metal nanoparticles (excluding oxide) or the metal element (M) constituting metal oxide nanoparticles of the types shown in Tables 1 to 9. Note that the following metal salts were used according to the types of metal nanoparticles ("metal nanoparticles: metal salt").
- Co: cobalt nitrate (II) hexahydrate (available from Wako Pure Chemical Industries, Ltd.)
- Ni: nickel nitrate (II) hexahydrate (available from Wako Pure Chemical Industries, Ltd.)
- Fe: iron nitrate (III) nonahydrate (available from Wako Pure Chemical Industries, Ltd.)
- Pt: chloroplatinic acid hexahydrate (available from Wako Pure Chemical Industries, Ltd.)
- AlOx: aluminium nitrate nonahydrate (available from Wako Pure Chemical Industries, Ltd.)
- FeOx: iron nitrate (III) nonahydrate (available from Wako Pure Chemical Industries, Ltd.)

Next, the metal containing aqueous solution was added to the powdery precursor material (A) by small amount several times and dried at room temperature (20°C ± 10°C) for 12 hours or longer to obtain the precursor material (B).

Note that when the condition for the presence or absence of additives shown in Tables 1 to 9 is "yes," pretreatment in which an aqueous solution of polyoxyethylene (15) oleyl ether (NIKKOL BO-15 V, available from Nikko Chemicals Co., Ltd.) was added as the additive to the precursor material (A) prior to adding the metal containing aqueous solution was performed, and then the metal containing aqueous solution was added as described above. Note that when the condition for the presence or absence of additives is "no", the pretreatment with the additive as described above was not performed.

Furthermore, the added amount of the metal containing aqueous solution added to the precursor material (A) was adjusted so that the value obtained by conversion to the ratio of silicon (Si) constituting the precursor material (A) to the metal element (M) contained in the metal containing aqueous solution (a ratio of the number of atoms Si/M) is the values in Tables 1 to 9.

Next, the precursor material (B) impregnated with the metal containing aqueous solution obtained as described above was calcinated in air at 600°C for 24 hours to obtain the precursor material (C).

The precursor material (C) obtained as described above and the structure directing agent shown in Tables 1 to 9 were mixed to produce a mixed aqueous solution. Hydrothermal treatment was performed at 80 to 350°C in a sealed container under the conditions of pH and time shown in Tables 1 to 8. Thereafter, the produced precipitate was filtered out, washed with water, dried at 100°C for 12 hours or longer, and further calcinated in air at 600°C for 24 hours. In Examples 1 to 384, after the calcination treatment, the calcinated product was collected, and a reduction treatment was performed at 400°C for 350 minutes under an inflow of hydrogen gas to obtain structured catalysts including supports and metal nanoparticles (Co nanoparticles, Ni nanoparticles, Fe nanoparticles, and Pt nanoparticles), or solid acid nanoparticles (AlOx nanoparticles, FeOx nanoparticles) shown in Tables 1 to 9.

### Comparative Example 1

In Comparative Example 1, cobalt oxide powder (II, III) having a mean particle size of 50 nm or less (available from Sigma-Aldrich Japan LLC) was mixed with MFI type silicalite, and a hydrogen reduction treatment was performed similarly to the examples to obtain silicalite where cobalt nanoparticles as a catalytic substance was attached to an outer surface of the silicalite as a skeletal body. The MFI type silicalite was synthesized in the similar method as in Examples 52 to 57 except for a step of adding a metal.

### Comparative Example 2

In Comparative Example 2, MFI type silicalite was synthesized in the similar method as in Comparative Example 1 except that the step of attaching the cobalt nanoparticles was omitted.

### Evaluation

Various characteristic evaluations were performed on the structured catalysts of Examples 1 to 419 and the silicalites of Comparative Examples 1 and 2 under the conditions described below.

### [A] Cross-Sectional Observation

Observation samples of the structured catalysts of Examples 1 to 419 and the silicalites of Comparative Examples 1 and 2 were produced by pulverization method, and the cross-sectional observation was performed using a transmission electron microscope (TEM) (TITAN G2, available from FEI).

As a result, it was confirmed that, in the structured catalysts of the examples, the catalytic substance was present and held in the support made from silicalite or zeolite. On the other hand, in the silicalite of Comparative Example 1, the catalytic substance was attached to the outer surface of the support only and not present inside the support.

In addition, among the examples described above, the cross section of the structured catalyst using iron nanoparticles (Fe) as the metal was cut by FIB (focused ion beam) processing, and cross-sectional elemental analysis was performed using SEM (SU8020, available from Hitachi High-Technologies Corporation), EDX (X-Max, available from Horiba, Ltd.). As a result, the Fe element was detected inside the support.

It was confirmed that iron nanoparticles were present inside the support from the results of the cross-sectional observation using the TEM and the SEM/EDX.

### [B] Mean Inner Diameter of Channel of Support and Mean Particle Size of Catalytic Substance

In a TEM image taken in the cross-sectional observation performed in the evaluation [A], 500 channels in the support were randomly selected, the respective major diameter and minor diameter were measured, the inner diameter was calculated from the mean values (N = 500), and further the mean value of the inner diameters was determined to be the mean inner diameter D_{F} of the channels in the support. In addition, for the catalytic substance, 500 parts of catalytic substance were randomly selected from the TEM image, the respective particle sizes were measured (N = 500), and the mean value of the particle sizes was determined to be the mean particle size D_{C} of the catalytic substance. The results are shown in Tables 1 to 9.

Also, SAXS (small angle X-ray scattering) was used for analysis to confirm the mean particle size and a dispersion status of the catalytic substance. Measurements by SAXS were performed using a Spring-8 beam line BL19B2. The obtained SAXS data was fitted with a spherical model using the Guinier approximation, and the particle size was calculated. The particle sizes of the structured catalysts whose metals were iron nanoparticles were measured. Furthermore, as a comparative reference, commercially available iron nanoparticles (available from Wako) were observed and measured on SEM.

As a result, in the commercially available products, iron oxide nanoparticles of various sizes in a range of particle sizes of approximately from 50 nm to 400 nm were randomly present, whereas in the measurement results of SAXS, scattering peaks with particle sizes of 10 nm or less were also detected in the structured catalysts of examples having a mean particle size of 1.2 nm to 2.0 nm obtained from the TEM image. From the measurement results of SAXS and the cross-sectional measurement results by SEM/EDX, it was found that catalytic substances having uniform particle sizes of 10 nm or less were present inside the support in a substantially high dispersed state.

### [C] Relationship between Added Amount of Metal Containing Solution and Amount of Metal Embedded in Support

A structured catalyst in which metal nanoparticles were embedded in the support at an added amount of the ratio of the number of atoms of Si/M = 50, 100, 200, or 1000 (M = Co, Ni, Fe, Cu) was produced, and then the amount of metal (mass%) that was embedded in the support of the structured catalyst produced at the added amount was measured. Note that in the present measurement, the structured catalyst having the ratio of number of atoms of Si/M = 100, 200, or 1000 was produced by adjusting the added amount of the metal containing solution in the same manner as the structured catalysts having the ratio of number of atoms of Si/M = 100, 200, or 1000 among Examples 1 to 384, and structured catalysts with the ratio of the number of atoms of Si/M = 50 were produced in the same manner as the structured catalysts with the ratio of number of atoms of Si/M = 100, 200, or 1000, except that the added amount of the metal containing solution was different.

As a result, it was confirmed that the amount of metal embedded in the support increases as the added amount of the metal containing solution increases, at least in a range that the ratio of number of atoms Si/M is from 50 to 1000.

### [D] Performance Evaluation

Catalytic ability (performance) of the metal nanoparticles (catalytic substance) were evaluated on the structured catalysts of the examples and the silicalites of the comparative examples. The results are shown in Tables 1 to 9.

### (1) Catalytic Activity

The catalytic activity was evaluated under the following conditions.

First, 0.2 g of the structured catalyst was charged in a normal pressure flow reactor, and a decomposition reaction of butylbenzene (model material of heavy oil) was performed with nitrogen gas (N₂) as a carrier gas (5 ml/min) at 400°C for 2 hours.

After completion of the reaction, the generated gas and the generated liquid that were collected were analyzed by gas chromatography (GC) and gas chromatography mass spectrometry (GC/MS) for the composition. Note that, as the analysis device, TRACE 1310 GC (available from Thermo Fisher Scientific Inc., detector: thermal conductivity detector, flame ionization detector), and TRACE DSQ (Thermo Fischer Scientific Inc., detector: mass detector, ionization method: EI (ion source temperature of 250°C, MS transfer line temperature of 320°C)) were used.

Furthermore, based on the results of the composition analysis described above, the yield (mol%) of a compound having a lower molecular weight than that of butylbenzene (specifically, benzene, toluene, ethylbenzene, styrene, cumene, methane, ethane, ethylene, propane, propylene, butane, butene, and the like) was obtained. The yield of the compound was calculated as the percentage (mol%) of the total amount (mol) of the amount of the material of the compound having a lower molecular weight than that of the butylbenzene contained in the generated liquid relative to the amount of the material of butylbenzene (mol) prior to the start of the reaction.

In the present example, when the yield of the compound having a lower molecular weight than that of the butylbenzene contained in the generated liquid was 40 mol% or more, it was determined that the catalytic activity (decomposition ability) was excellent, and considered as "A". When it was 25 mol% or more and less than 40 mol%, it was determined that the catalytic activity was satisfactory, and considered as "B". When it was 10 mol% or more and less than 25 mol%, it was determined that the catalytic activity was not satisfactory, but was in a pass level (acceptable), and considered as "C". When it was less than 10 mol%, it was determined that the catalytic activity was poor (not pass), and considered as "D".

### (2) Durability (Life Time)

The durability was evaluated under the following conditions.

First, the structured catalyst used in the evaluation (1) above was recovered and heated at 650°C for 12 hours to produce a structured catalyst after heating. Next, a decomposition reaction of the butylbenzene (model material of heavy oil) was performed by the similar manner as in the evaluation (1) above using the obtained structured catalyst after heating, and further composition analysis of the generated gas and the generated liquid was performed in the similar manner as in the evaluation (1) above.

Based on the obtained analytical results, the yield (mol%) of a compound having a lower molecular weight than that of the butylbenzene was obtained in the similar manner as in the evaluation (1) above. Furthermore, the degree of maintaining the yield of the above compound by the structured catalyst after heating was compared with the yield of the above compound by the structured catalyst prior to heating (the yield obtained in the evaluation (1) above) to determine the degree of sustaining. Specifically, the percentage (%) of the yield of the compound by the structured catalyst after heating (the yield obtained in the evaluation (2) above) to the yield of the compound by the structured catalyst prior to heating (the yield obtained in the evaluation (1) above) was calculated.

In the present embodiment, when the yield of the compound by the structured catalyst after heating (the yield obtained in the evaluation (2)) was maintained 80% or greater compared to the yield of the compound by the structured catalyst prior to heating (the yield obtained in the evaluation (1) above), it was determined that durability (heat resistance) was excellent, and considered as "A". When it was maintained 60% or greater and less than 80%, it was determined that durability (heat resistance) was satisfactory, and considered as "B". When it was maintained 40% or greater and less than 60%, it was determined that durability (heat resistance) was not satisfactory, but was in a pass level (acceptable), and considered as "C". When it was reduced below 40%, it was determined that durability (heat resistance) was poor (not pass), and considered as "D".

Performance evaluations similar to those of the evaluations (1) and (2) were also performed on Comparative Examples 1 and 2. Note that Comparative Example 2 is a skeletal body itself and does not contain metal nanoparticles. Therefore, in the performance evaluation, only the skeletal body of Comparative Example 2 was charged in place of the structured catalyst. The results are shown in Table 8.

In addition, applicability of the structured catalyst using solid acid nanoparticles as a catalytic substance was also confirmed by the following evaluations for Fluid Catalytic Cracking (FCC), which is a main process for petroleum refining.

0.2 g of the structured catalyst was charged in the normal pressure flow reactor, and a decomposition reaction of hexane (model material) was performed at 650°C for 1 hour. After completion of the reaction, the generated gas and generated liquid that was collected were analyzed by gas chromatography mass spectrometry (GC/MS) for the composition. Note that, as the analysis device for the generated gas, TRACE 1310 GC (available from Thermo Fisher Scientific Inc., detector: thermal conductivity detector) was used, and as the analysis device of the generated liquid, TRACE DSQ (Thermo Fischer Scientific Inc., detector: mass detector, ionization method: EI (ion source temperature of 250°C, MS transfer line temperature of 320°C, detector: thermal conductivity detector)) was used.

Based on the results of the composition analysis, a yield (mol%) of a compound having a lower molecular weight than that of hexane (hydrocarbon with C5 or less) was obtained. When the yield was 10 mol% or higher, the catalytic activity (decomposition ability) was determined to be excellent, and considered as "B". When the yield was 5 mol% or greater and less than 10 mol, the catalytic activity was determined to be satisfactory, and considered as "C". When the yield was less than 5 mol%, the catalytic activity was determined to be poor (not pass), and considered as "D".

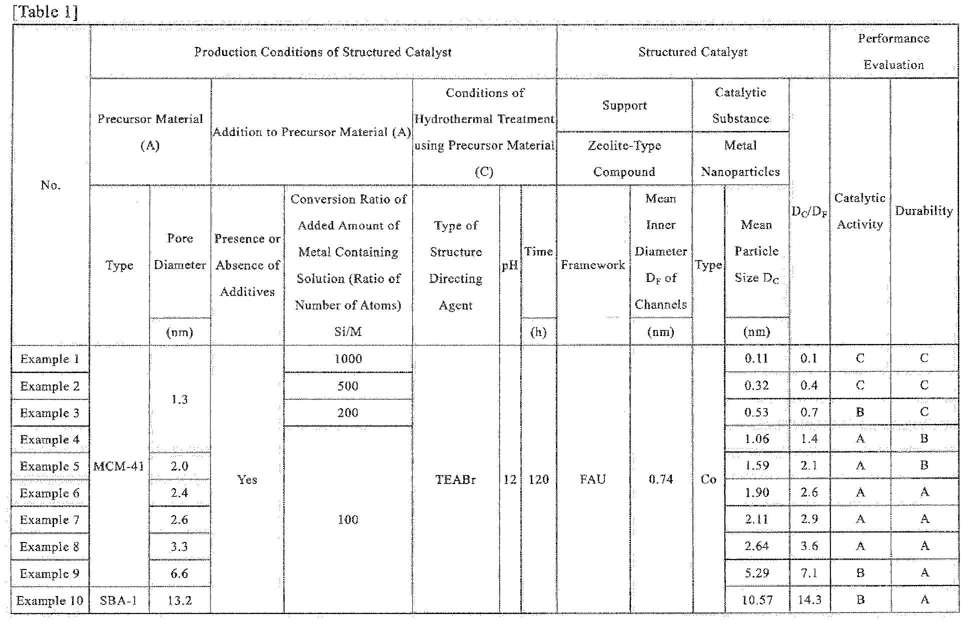

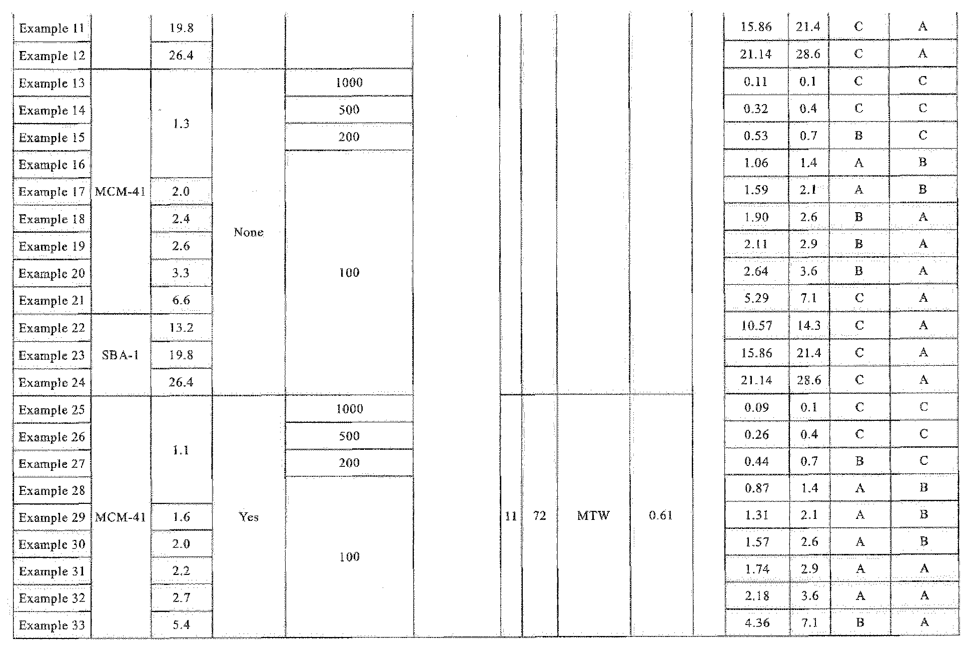

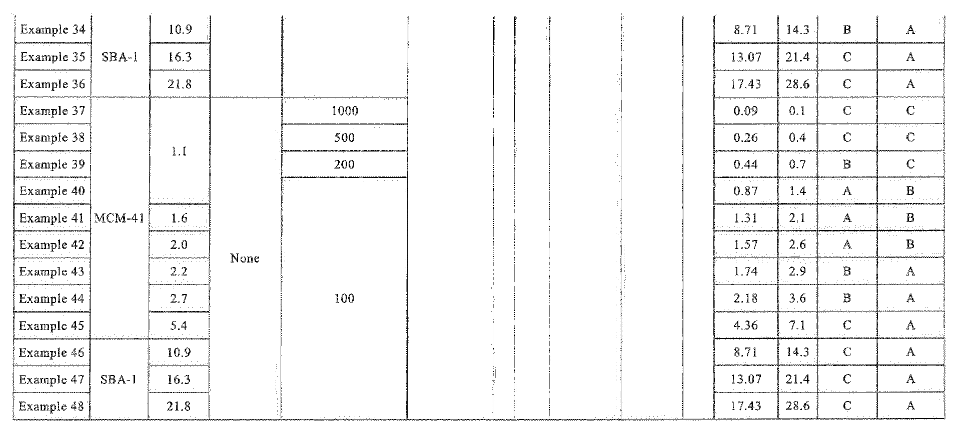

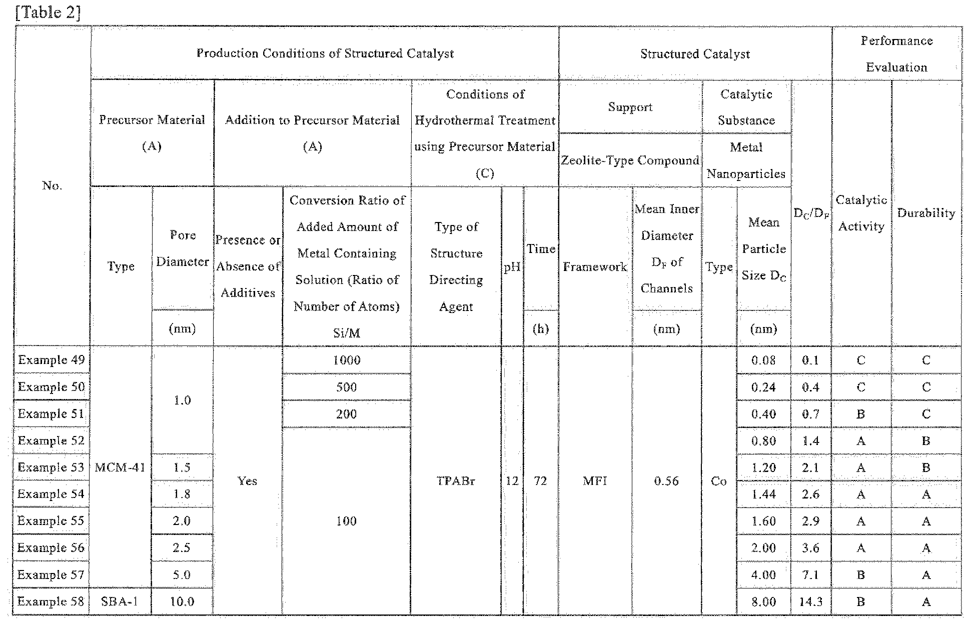

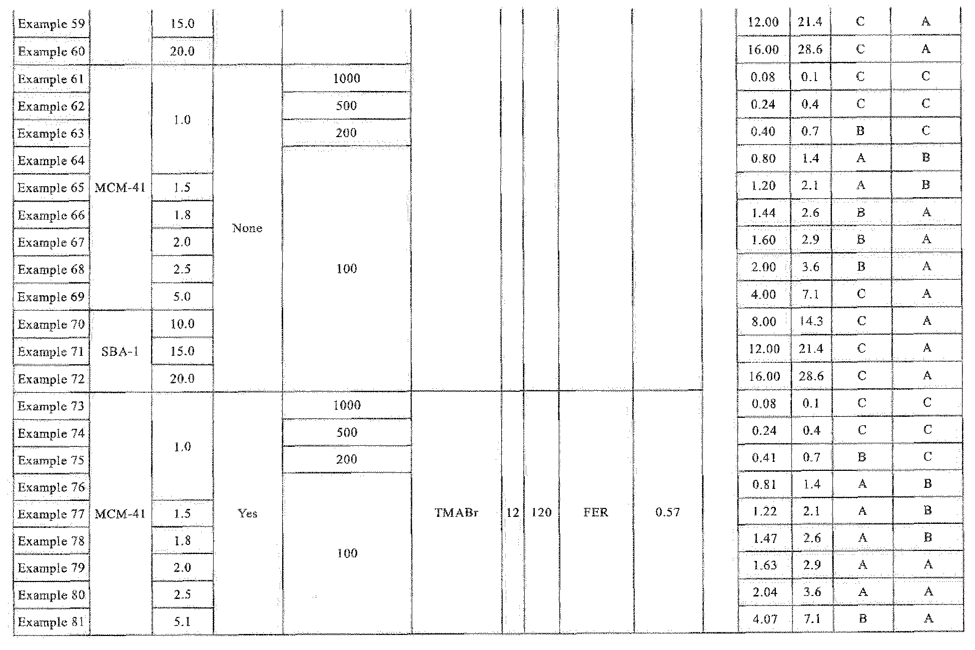

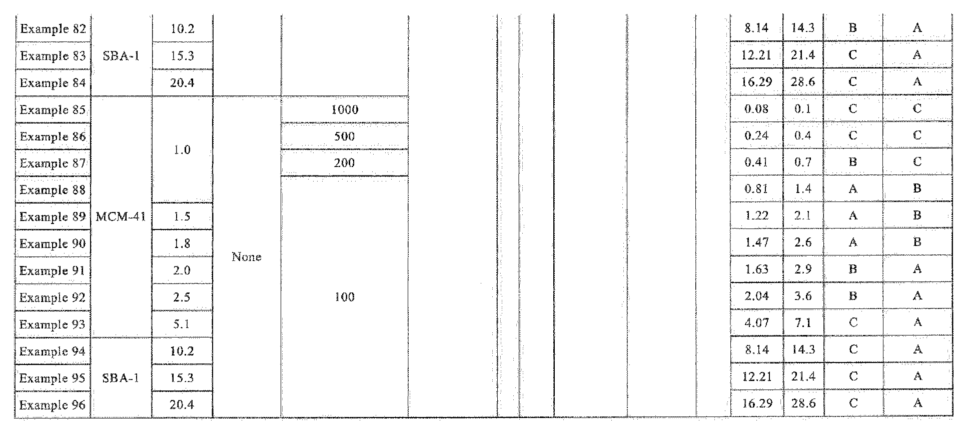

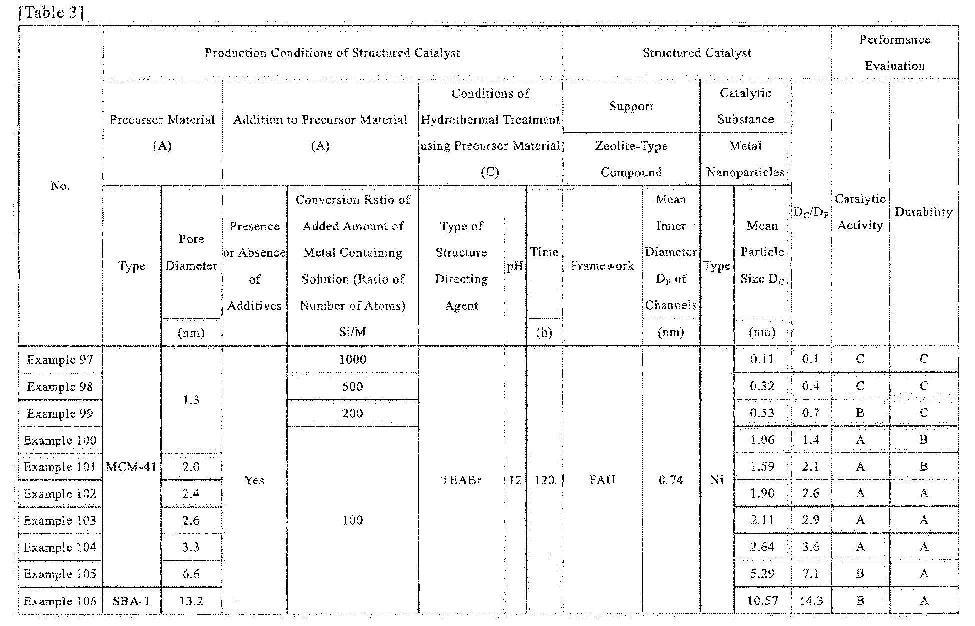

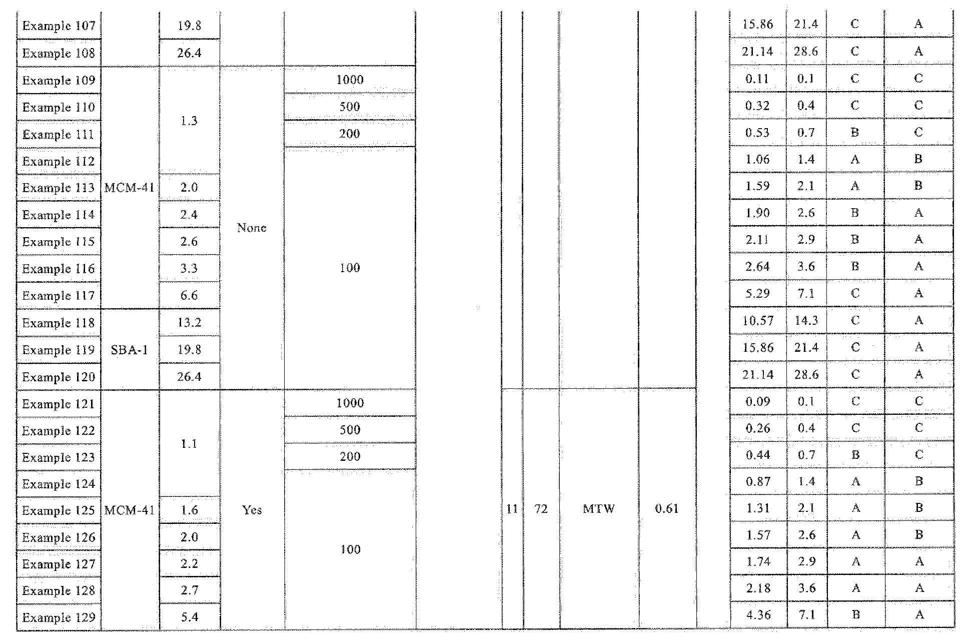

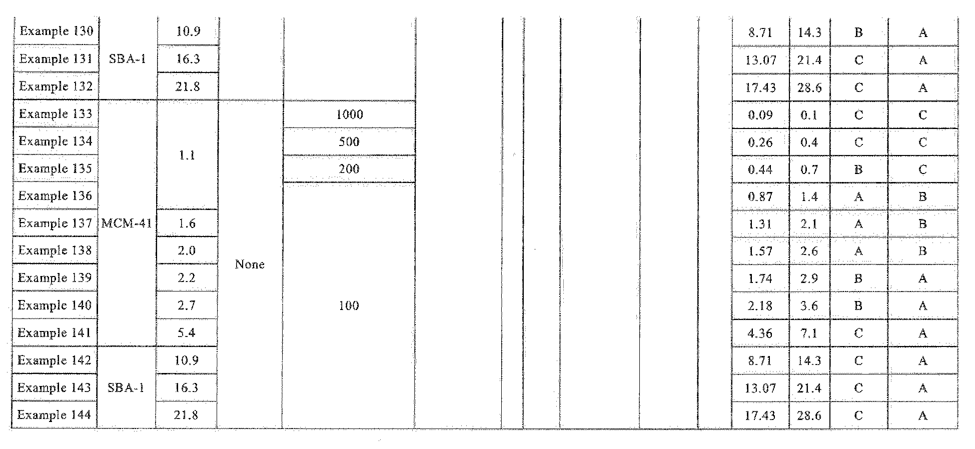

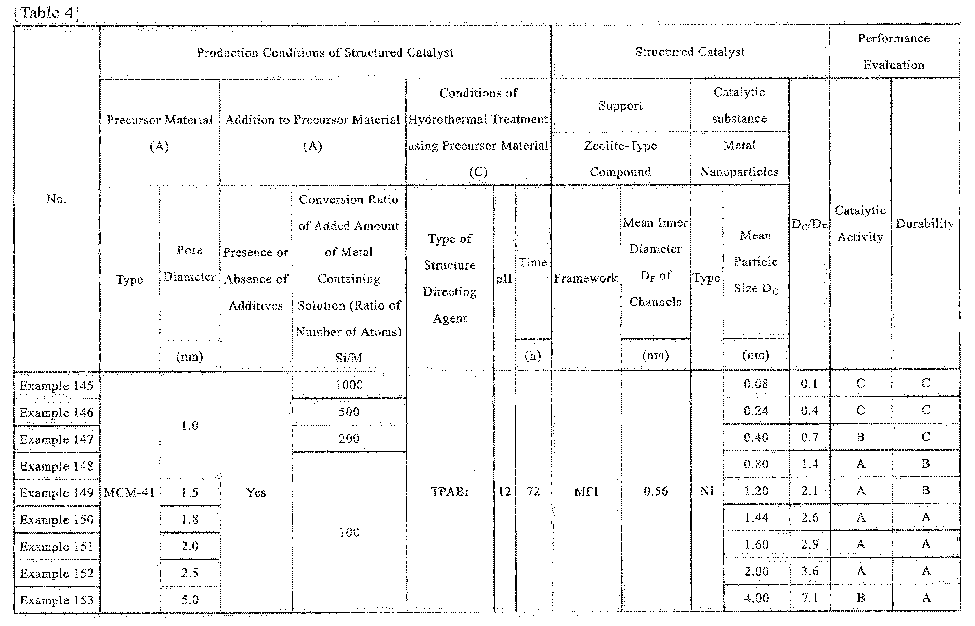

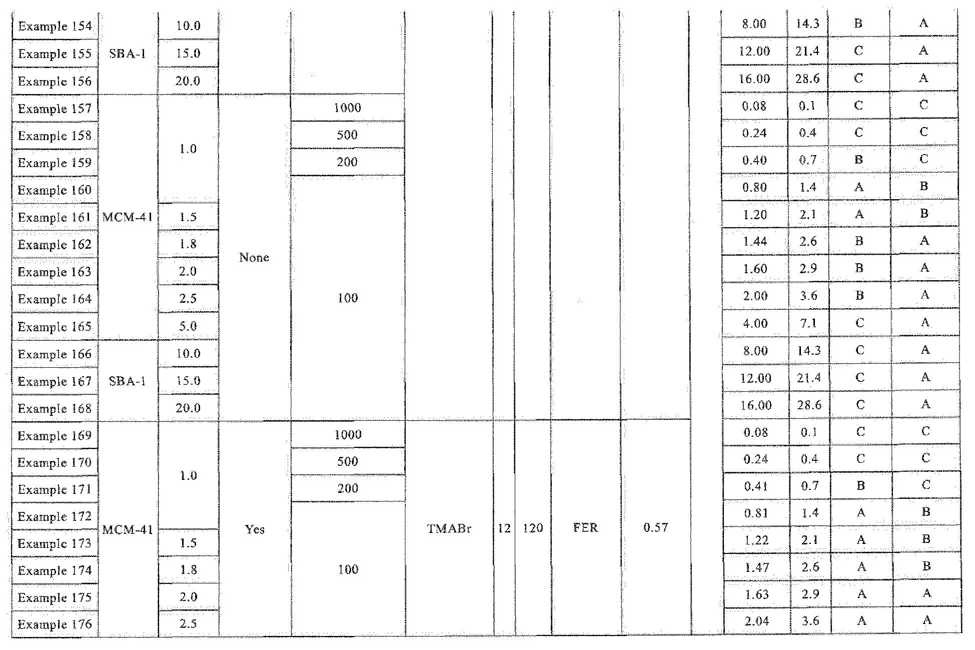

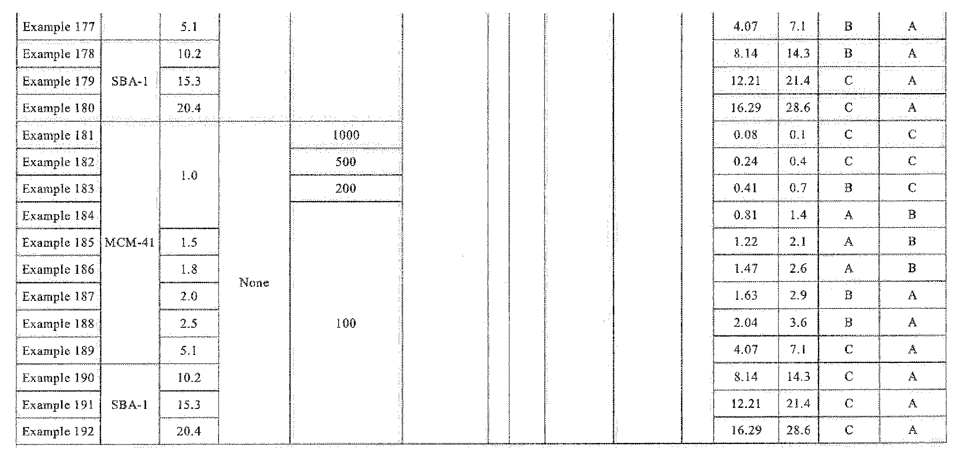

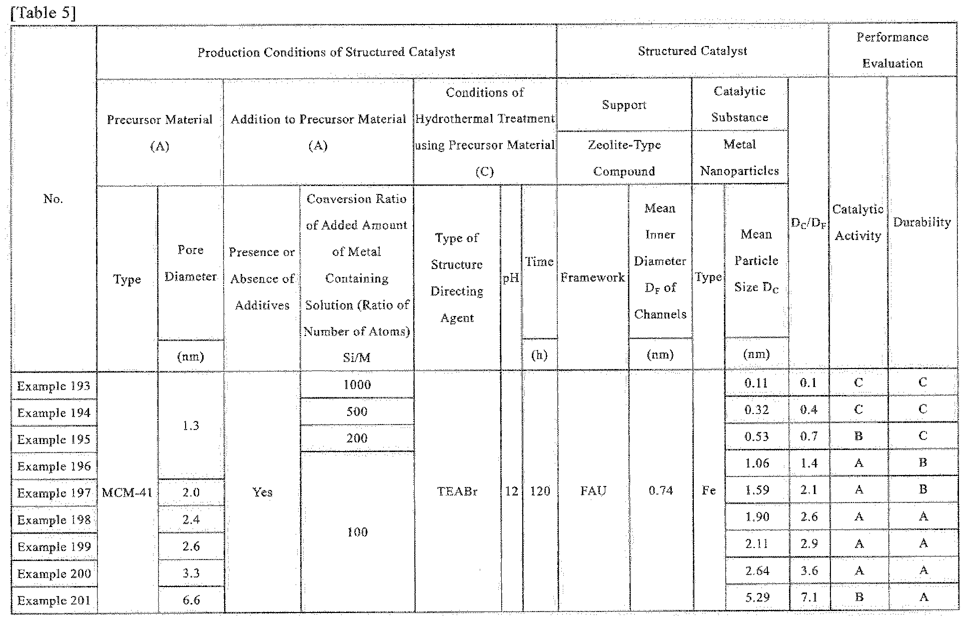

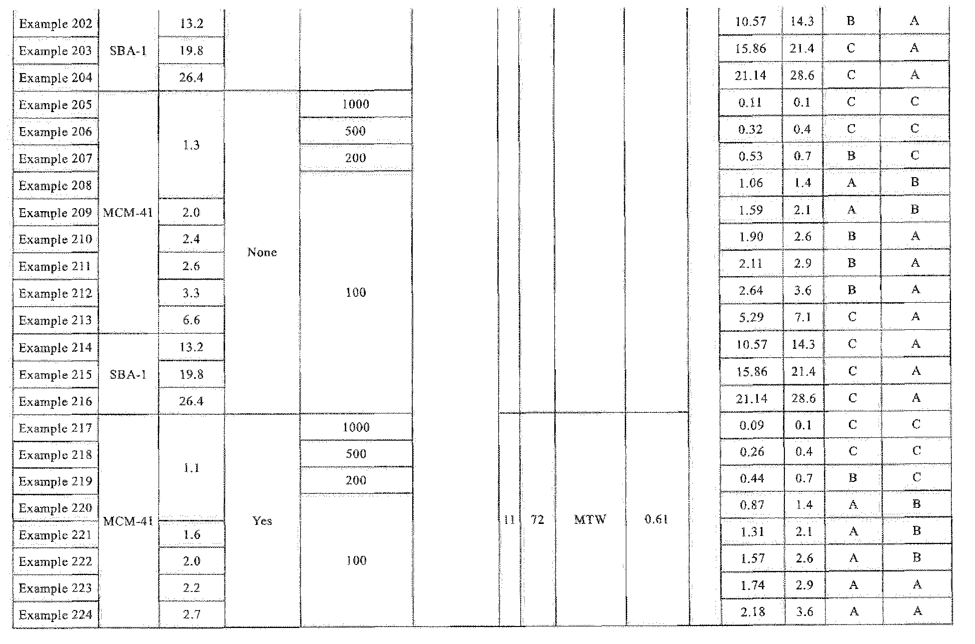

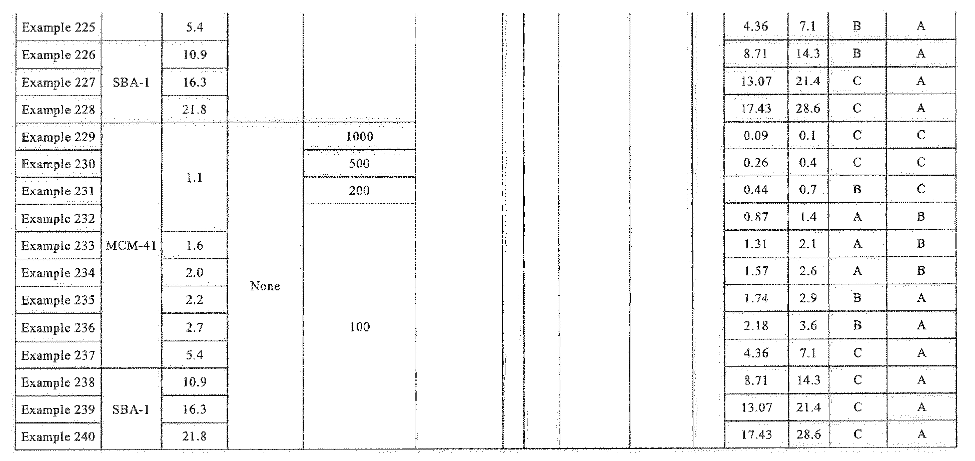

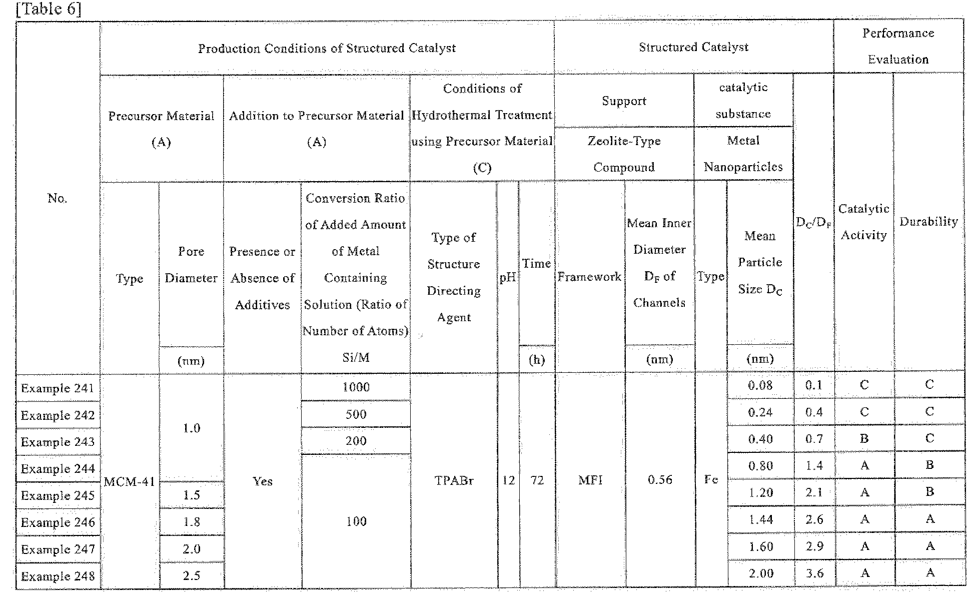

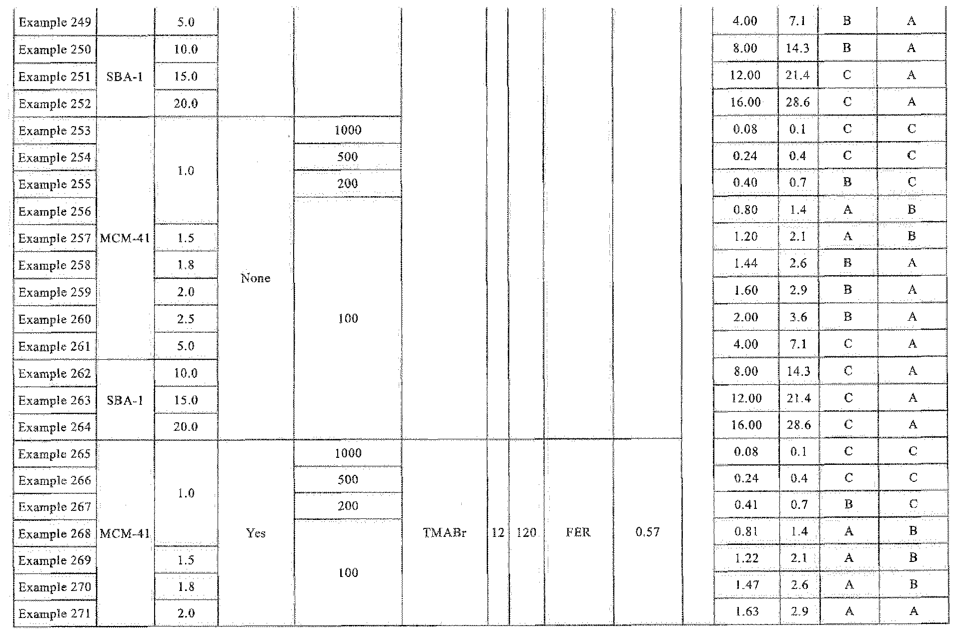

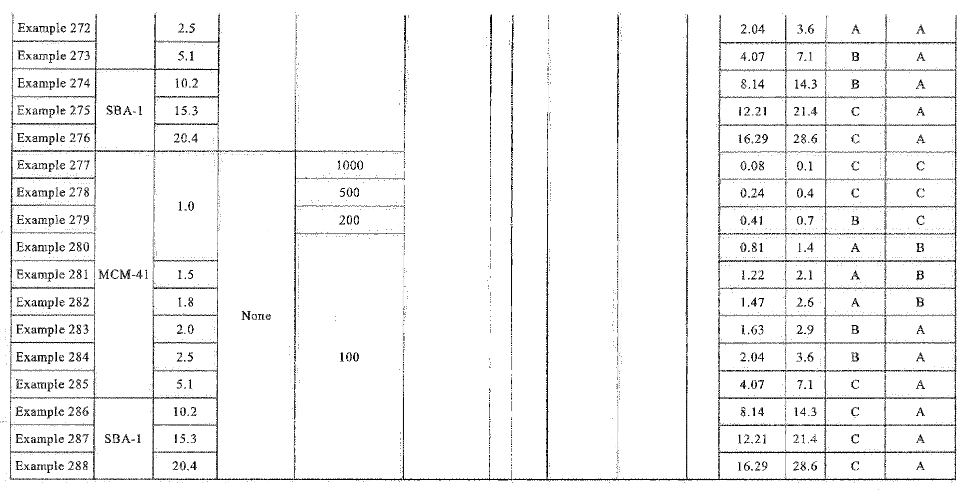

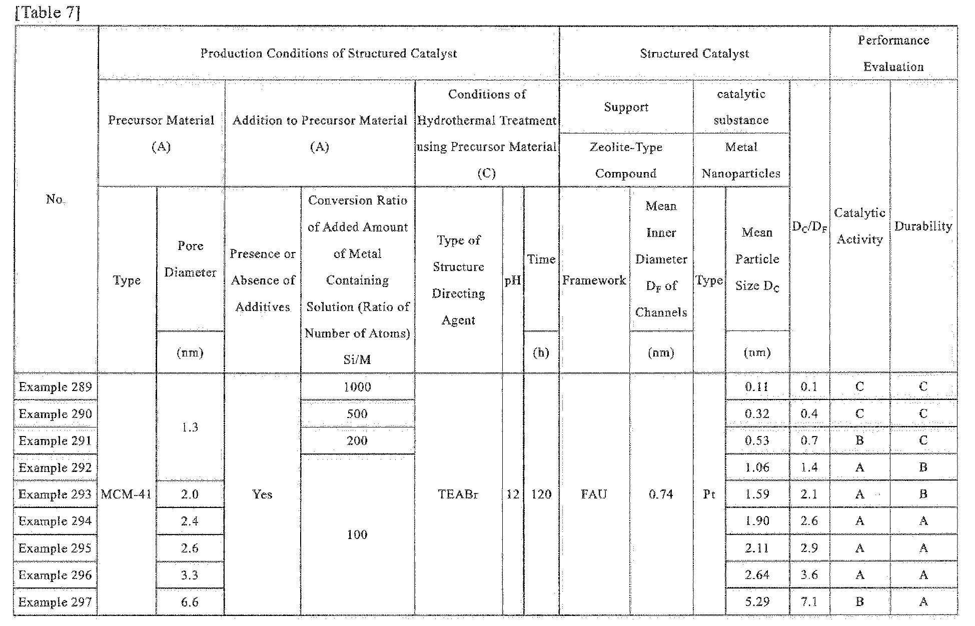

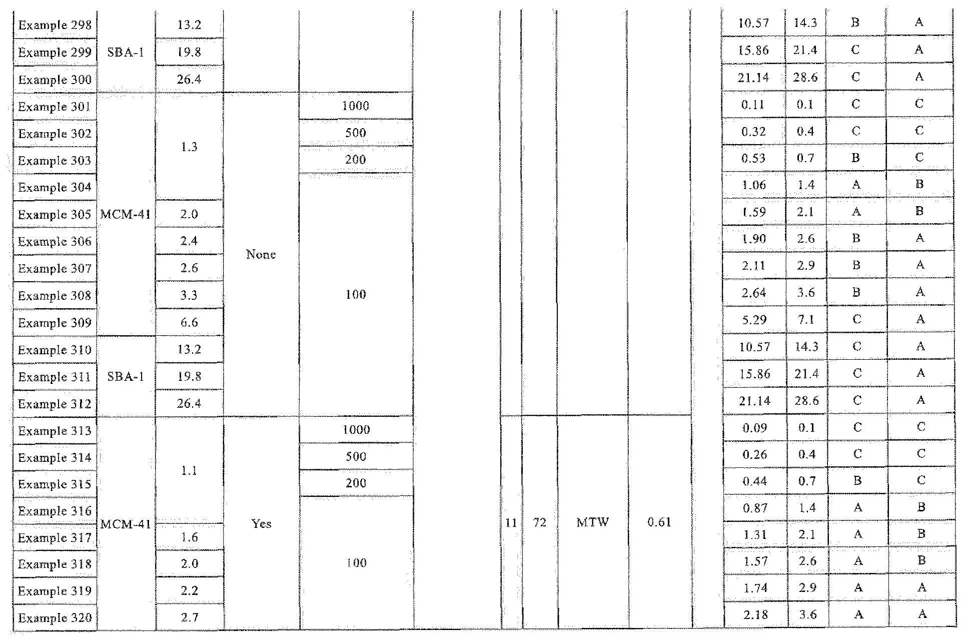

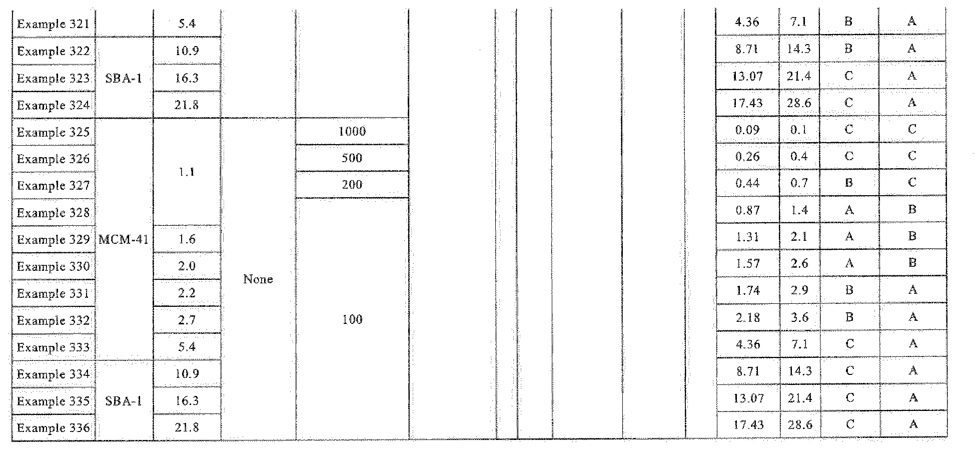

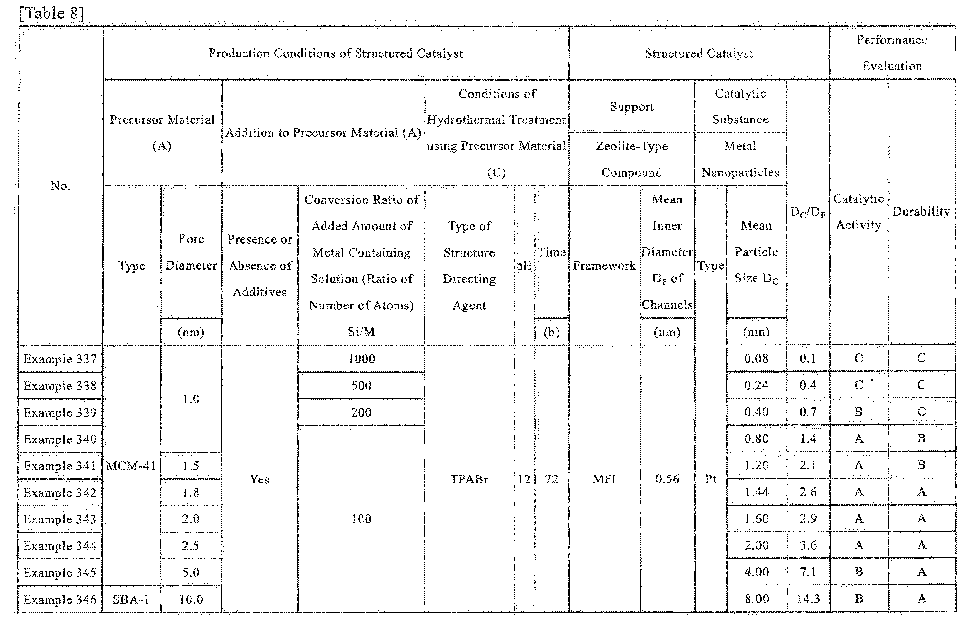

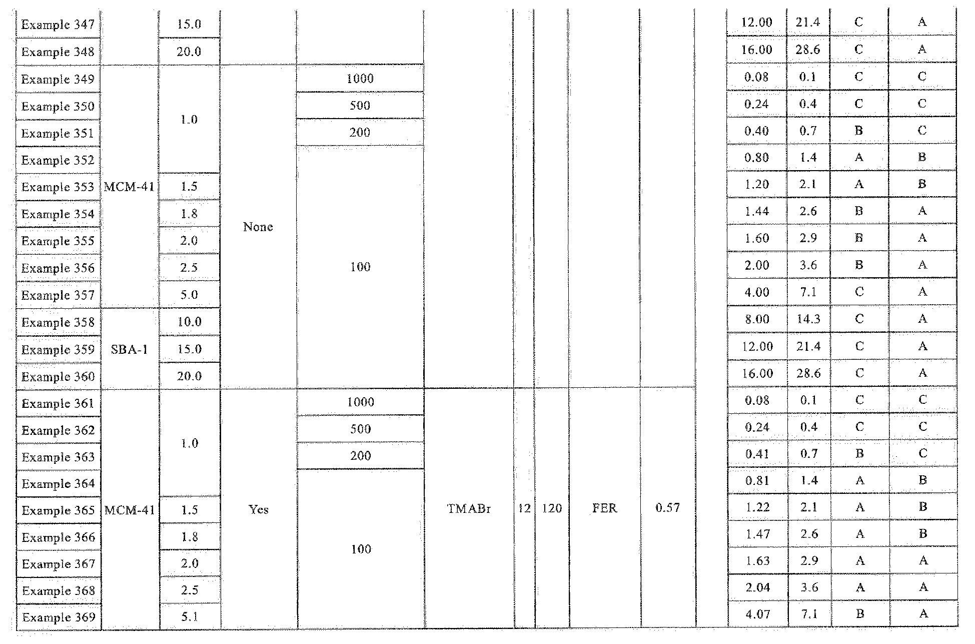

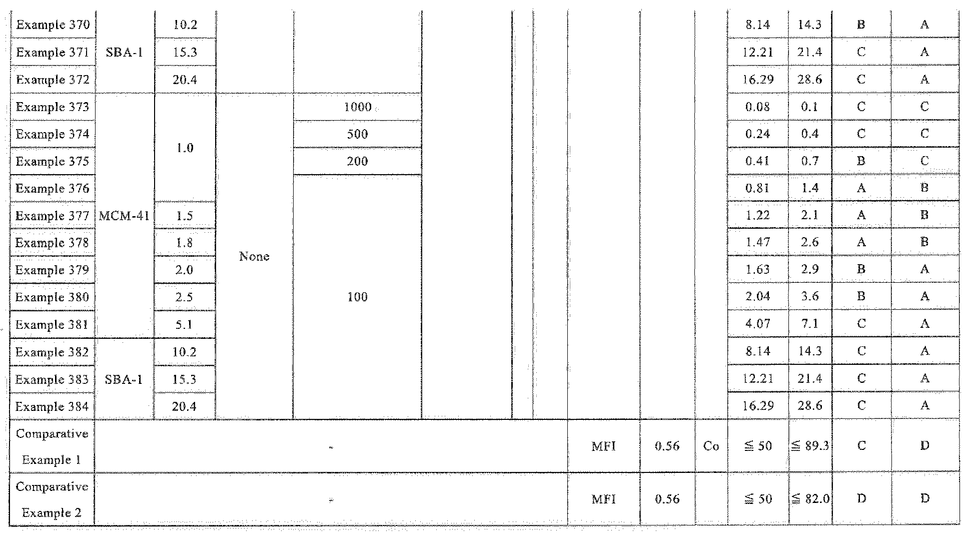

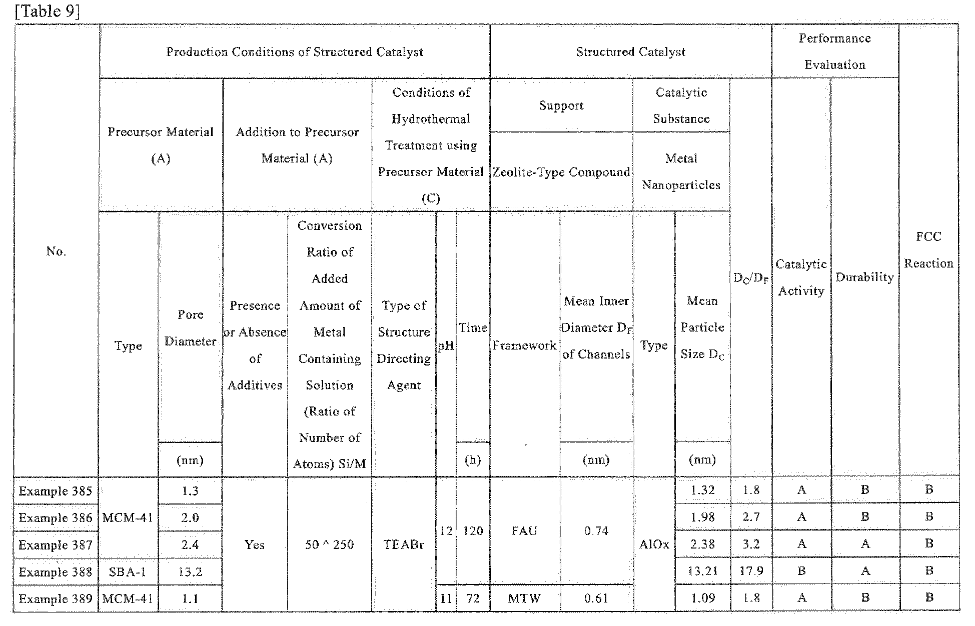

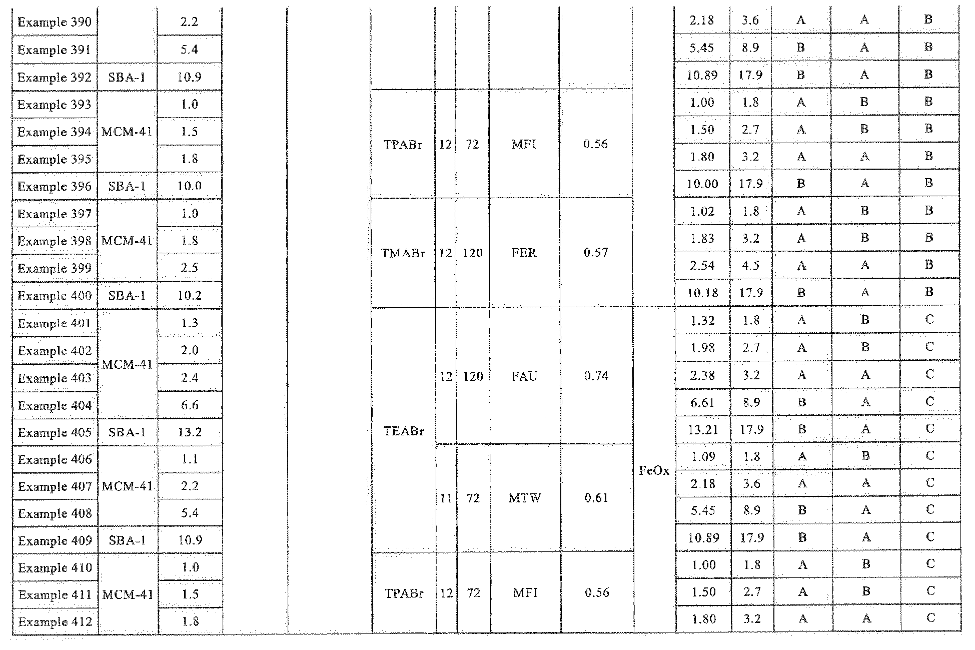

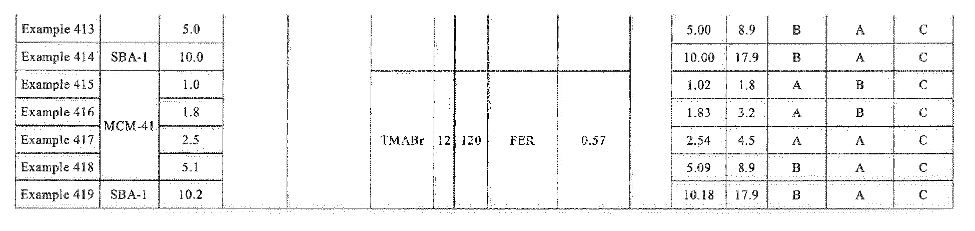

As can be seen from Tables 1 to 9, the structured catalyst (Examples 1 to 419), which was confirmed by cross-sectional observation to hold the catalytic substance inside the support, was found to exhibit excellent catalytic activity in the decomposition reaction of the butylbenzene and excellent durability as the catalyst compared to the silicalite in which the catalytic substance was attached to the outer surface of the support only (Comparative Example 1) or the silicalite itself without any catalytic substance (Comparative Example 2). Additionally, the examples that used the FAU type (Y-type) as the zeolite-type compound exhibited the relatively satisfactory results compared to those using zeolites of other types.

In addition, the relationship between the amount of metal (mass%) embedded in the support of the structured catalyst measured in the evaluation [C], and the yield (mol%) obtained in the evaluation (1) was evaluated. The evaluation method was the same as the evaluation method performed in "(1) Catalytic Activity" in the [D] "Performance Evaluation" described above.

As a result, in each example, it has been found that, when the added amount of the metal containing solution added to the precursor material (A), in terms of the ratio of number of atoms Si/M, is from 50 to 200 (content of the metal element (M) of the metal nanoparticles relative to the structured catalyst is from 0.5 to 2.5 mass%), the yield of the compound having a lower molecular weight than that of the butylbenzene contained in the generated liquid was 32 mol% or greater, and the catalytic activity in the decomposition reaction of the butylbenzene is especially excellent.

On the other hand, in the structured catalyst of Comparative Example 1 in which the catalytic substance was attached to the outer surface of the support only, the catalytic activity in the decomposition reaction of the butylbenzene was improved compared to the support itself of Comparative Example 2, which did not contain any catalytic substance; however, the structured catalyst exhibited inferior durability as the catalyst compared to the structured catalysts of Examples 1 to 419.

In addition, the skeletal body itself of Comparative Example 2, which did not contain any functional substance, exhibited little catalytic activity in the decomposition reaction of the butylbenzene, and both the catalytic activity and the durability were inferior to the structured catalysts of Examples 1 to 419.

It has been found that, in Examples 385 to 419, the solid acid catalyst exhibited excellent hexane decomposition ability, and in particular AlOx exhibited better decomposition ability than that of FeOx.

Note that high octane gasoline with high octane rating is produced by using the structured catalyst according to an embodiment of the present invention for heavy oil using residual oil (atmospheric residue or vacuum residue gas oil) as a raw material under a condition of 500 to 550°C. At this time, even when the structured catalyst according to an embodiment of the present invention is used in FCC treatment, for example, for producing gasoline with high octane rating using a residue oil that is confirmed to be produced along with approximately from 3 to 5 wt.% of propylene, and catalytic activity and durability are recognized to be satisfactory similarly as described above.

### Reference Signs List

- 1: Structured catalyst
- 10: Support
- 10a: Outer surface
- 11: Channel
- 11a: Pore
- 12: Enlarged pore portion
- 20: Catalytic substance
- 30: Catalytic substance
- D_{C}: Mean particle size
- D_{F}: Mean inner diameter
- D_{E}: Inner diameter

## Claims

1. A structured catalyst for fluid catalytic cracking comprising:
a support having a porous structure composed of a zeolite-type compound; and
at least one catalytic substance present inside the support,
the support comprising channels connecting with one another,
the catalytic substance being one of metal nanoparticles and a solid acid, the catalytic substance being present in at least the channel of the support,
when the catalytic substance is the metal nanoparticles, the metal nanoparticles being metal nanoparticles of at least one type selected from the group consisting of nickel (Ni), cobalt (Co), iron (Fe), copper (Cu), gold (Au), silver (Ag), platinum (Pt), palladium (Pd), rhodium (Rd), iridium (Ir), ruthenium (Ru), osmium (Os), and molybdenum (Mo).

2. The structured catalyst for fluid catalytic cracking according to claim 1, wherein
the support is a zeolite Y-type compound.

3. The structured catalyst for fluid catalytic cracking according to claim 1 or 2, wherein
the channel has any of a one-dimensional pore, a two-dimensional pore, and a three-dimensional pore and an enlarged pore portion, the one-dimensional pore, the two-dimensional pore, and the three-dimensional pore being defined by a framework of the zeolite-type compound, the enlarged pore portion having a different diameter from those of the one-dimensional pore, the two-dimensional pore, and the three-dimensional pore, and
the catalytic substance is present in at least the enlarged pore portion of the channel.

4. The structured catalyst for fluid catalytic cracking according to claim 3, wherein
the enlarged pore portion causes a plurality of pores constituting any of the one-dimensional pore, the two-dimensional pore, and the three-dimensional pore to connect with one another.

5. The structured catalyst for fluid catalytic cracking according to claim 3 or 4, wherein
when the catalytic substance is the metal nanoparticles, the metal nanoparticles has a mean particle size larger than a mean inner diameter of the channel and less than or equal to an inner diameter of the enlarged pore portion; or when the catalytic substance is the solid acid, the solid acid is nanoparticles having a mean particle size larger than a mean inner diameter of the channel and less than or equal to an inner diameter of the enlarged pore portion.

6. The structured catalyst for fluid catalytic cracking according to claim 5, wherein
one of the metal nanoparticles and the solid acid contain(s) a metal element (M) in amount from 0.5 to 2.5 mass% relative to the structured catalyst for fluid catalytic cracking.

7. The structured catalyst for fluid catalytic cracking according to any one of claims 3 to 6, wherein
the channel has a mean inner diameter from 0.1 nm to 1.5 nm, and
the enlarged pore portion has an inner diameter from 0.5 nm to 50 nm.

8. The structured catalyst for fluid catalytic cracking according to any one of claims 1 to 7, wherein
the catalytic substance is the metal nanoparticles, and the metal nanoparticles have a mean particle size from 0.08 nm to 30 nm.

9. The structured catalyst for fluid catalytic cracking according to claims 8, wherein
the metal nanoparticles have the mean particle size from 0.4 nm to 11.0 nm.

10. The structured catalyst for fluid catalytic cracking according to any one of claims 1 to 9, wherein
the catalytic substance is the metal nanoparticles, and a ratio of the mean particle size of the metal nanoparticles to the mean inner diameter of the channel is from 0.05 to 300.

11. The structured catalyst for fluid catalytic cracking according to any one of claims 1 to 10, wherein
the catalytic substance is the metal nanoparticles, and a ratio of the mean particle size of the metal nanoparticles to the mean inner diameter of the channel is from 0.1 to 30.

12. The structured catalyst for fluid catalytic cracking according to any one of claims 1 to 11, wherein
the catalytic substance is the metal nanoparticles, and a ratio of the mean particle size of the metal nanoparticles to the mean inner diameter of the channel is from 1.4 to 3.6.

13. The structured catalyst for fluid catalytic cracking according to any one of claims 1 to 12, wherein
the catalytic substance is further held on an outer surface of the support.

14. The structured catalyst for fluid catalytic cracking according to claim 13, wherein
a content of the catalytic substance present inside the support is greater than a content of the catalytic substance held on the outer surface of the support.

15. The structured catalyst for fluid catalytic cracking according to any one of claims 1 to 14, wherein
the zeolite-type compound is a silicate compound.

16. The structured catalyst for fluid catalytic cracking according to any one of claims 1 to 15, wherein
the structured catalyst for fluid catalytic cracking has one of a cylindrical shape, a leaf-like shape, a dumbbell pillar shape, and a ring-like pellet shape.

17. A fluid catalytic cracking device comprising the structured catalyst for fluid catalytic cracking described in any one of claims 1 to 16.

18. A method for producing a structured catalyst for fluid catalytic cracking, comprising:
a calcination step of calcinating a precursor material (B), the precursor material (B) being obtained by impregnating a precursor material (A) for obtaining a framework having a porous structure composed of a zeolite-type compound, with a metal containing solution containing one of metal of metal nanoparticles and a metal of solid acid;
a hydrothermal treatment step of performing a hydrothermal treatment on a precursor material (C) obtained by calcinating the precursor material (B); and
a step of performing a reduction treatment on the hydrothermally treated precursor material (C).

19. The method for producing a structured catalyst for fluid catalytic cracking according to claim 18, wherein
prior to the calcination step, from 50 to 500 mass% of a non-ionic surfactant is added to the precursor material (A).

20. The method for producing a structured catalyst for fluid catalytic cracking according to claim 18 or 19, wherein
prior to the calcination step, the metal containing solution is dividedly added to the precursor material (A) in multiple times to impregnate the precursor material (A) with the metal containing solution.

21. The method for producing a structured catalyst for fluid catalytic cracking according to any one of claims 18 to 20, wherein
when the precursor material (A) is impregnated with the metal containing solution prior to the calcination step, an added amount of the metal containing solution added to the precursor material (A), in terms of a ratio of silicon (Si) constituting the precursor material (A) to a metal element (M) contained in the metal containing solution added to the precursor material (A) (a ratio of number of atoms Si/M), is adjusted to from 10 to 1000.

22. The method for producing a structured catalyst for fluid catalytic cracking according to claim 18, wherein
in the hydrothermal treatment step, the precursor material (C) and a structure directing agent are mixed.

23. The method for producing a structured catalyst for fluid catalytic cracking according to claim 18, wherein
the hydrothermal treatment step is performed under a basic condition.
